# EUROPEAN PATENT APPLICATION

(11) **EP 4 094 972 A1**
(43) Date of publication of application: **30.11.2022**
(21) Application number: 21881339.2
(22) Date of filing: 01.04.2021
(51) Int. Cl.: B60L 7/22, B60L 7/10, B60T 8/172, B60T 8/171, B60T 13/74, B62L 3/02, B62L 1/00, B62J 45/41

(54) **BRAKING OPERATION SYSTEM FOR ELECTRIC VEHICLE**

(71) Applicant: Park, Keun Ho, Daegu 42004 (KR); Datamkorea Co., Ltd, Seoul 08504 (KR)
(72) Inventor: PARK, Keun Ho, Daegu 42004 (KR); PARK, Gye Jeung, Daegu 42004 (KR)
(74) Representative: González López-Menchero, Álvaro Luis
(86) International application number: PCT/KR2021/004048
(87) International publication number: WO 2022/211152

(57) **Abstract**

Proposed is an electric vehicle braking manipulation system. The electric vehicle braking manipulation system causes a mechanical braking unit and a regenerative braking unit to be operated together by a brake manipulation unit, thereby enabling the easy and rapid operation of the regenerative braking unit, enabling the configuration of a simple and inexpensive device and enabling smooth braking without slipping together with a shortened braking distance, and causes the degree of operation of the regenerative braking unit to be adjusted by rotating the brake manipulation unit, thereby enabling the adjustment of the operation of the regenerative braking unit to be easily carried out.

## Description

### Technical Field

The present disclosure relates to an electric vehicle braking manipulation system, and more particularly, to an electric vehicle braking manipulation system which causes a mechanical braking unit and a regenerative braking unit to be operated together by a brake manipulation unit, thereby enabling the easy and rapid operation of the regenerative braking unit, enabling the configuration of a simple and inexpensive device and enabling smooth braking without slipping together with a shortened braking distance, and which causes the degree of operation of the regenerative braking unit to be adjusted by rotating the brake manipulation unit, thereby enabling the adjustment of the operation of the regenerative braking unit to be easily carried out.

### Background Art

In general, an electric vehicle means a vehicle which drives a motor using electrical energy stored in a battery and uses the driving force of the motor as an entire or partial power source. Such an electric vehicle is classified into a pure electric vehicle which uses only the electrical energy of a battery as a power source and a hybrid electric vehicle which includes an internal combustion engine and uses the power generated in the engine to charge a battery and/or drive the vehicle. In the present disclosure, an electric vehicle as a concept including the pure electric vehicle and the hybrid electric vehicle is used as a concept including an automobile, a motorcycle, a scooter, a bicycle, a kickboard and other means of transportation.

As a braking unit used in the electric vehicle, there are a mechanical braking unit, a braking unit which uses only a regenerative braking force without regeneration (energy recovery), and a regenerative braking unit which recovers energy in a regenerative type. First, in the case of the mechanical braking unit, since braking is performed by a frictional force, the kinetic energy of the electric vehicle is converted into frictional heat energy and the frictional heat energy is discharged to the atmosphere to perform braking. The basic structure of the mechanical braking unit is composed of a manipulation mechanism which transfers a driver's manipulation force by using a link, a drum or a hydraulic pressure and a disc-shaped structure which generates a braking force by receiving the force of the manipulation mechanism. In the mechanical braking unit, since braking is performed by removing the rotational energy of wheels, energy loss is caused in that 100% of energy is lost as heat generated due to friction. Furthermore, the disc for a brake and pads whose surfaces hold the disc should be periodically replaced for maintenance due to heat and wear by friction.

A braking unit which, by recycling energy to be 100% wasted, regenerates kinetic energy into electrical energy upon braking as disclosed in a patent document to be described below, unlike removing the kinetic energy of a vehicle as heat upon braking, is referred to as a regenerative braking unit. The regenerative braking unit uses 100% of energy except a braking force upon braking to generate electrical energy, and uses the generated electrical energy to charge a battery. Therefore, most of inertia moment kinetic energy according to the driving speed of a vehicle is converted into electrical energy at high efficiency by a generator and is reused as energy for driving a motor. Accordingly, advantages are provided in that braking and generation of electrical energy are simultaneously achieved and also a braking distance may be reduced.

However, since most electric vehicles require a separate manipulation device to operate the regenerative braking unit, there is a problem in that the operation of the regenerative braking unit is not quickly performed.

### (Patent Document)

Korean Patent No. 10-0873537 (registered on December 4, 2008) entitled "Two-wheeled Moving Body and Motorcycle Having the Same."

### Disclosure

### Technical Problem

The present disclosure has been made in an effort to solve the problems described above.

An objective of the present disclosure is to provide an electric vehicle braking manipulation system which causes a mechanical braking unit and a regenerative braking unit to be operated together by a brake manipulation unit, thereby enabling the easy and rapid operation of the regenerative braking unit, enabling the configuration of a simple and inexpensive device and enabling smooth braking without slipping together with a shortened braking distance.

Another objective of the present disclosure is to provide an electric vehicle braking manipulation system which causes the degree of operation of the regenerative braking unit to be adjusted by rotating the brake manipulation unit, thereby enabling the adjustment of the operation of the regenerative braking unit to be easily carried out.

Still another objective of the present disclosure is to provide an electric vehicle braking manipulation system which causes the degree of operation of the rechargeable braking unit to be gradually and variably increased at an initial stage of rotation of the brake manipulation unit and causes the operations of the regenerative braking unit and the mechanical braking unit to be simultaneously performed while maximally maintaining the degree of operation of the regenerative braking unit after a predetermined range of rotation of the brake manipulation unit, thereby enabling smooth and effective braking.

Yet another objective of the present disclosure is to provide an electric vehicle braking manipulation system which defines rotation means rotating together with the brake manipulation unit and sensor means detecting the rotation of the rotation means and generating a variable voltage or current signal, so as to increase the degree of operation of the regenerative braking unit according to the voltage or current signal, thereby enabling the adjustment of the operation of the regenerative braking unit to be accurately and stably carried out.

### Technical Solution

In order to achieve the objectives, the present disclosure is implemented by embodiments having the following configurations.

According to an embodiment of the present disclosure, an electric vehicle braking manipulation system having a mechanical braking unit and a regenerative braking unit may include: a brake manipulation unit rotated by a hand or foot of an electric vehicle driver to operate the mechanical braking unit; and a regenerative operation unit configured to operate the regenerative braking unit according to rotation of the brake manipulation unit.

According to another embodiment, the electric vehicle braking manipulation system may include: a regenerative adjustment unit configured to adjust a degree of operation of the regenerative braking unit according to rotation of the brake manipulation unit.

According to another embodiment, the regenerative adjustment unit variably may increase a degree of operation of the regenerative braking unit according to a predetermined degree of initial rotation of the brake manipulation unit, and after the predetermined degree of rotation, may maintain a maximum degree of operation of the regenerative braking unit and cause the regenerative braking unit to simultaneously operate with the mechanical braking unit.

According to another embodiment, the regenerative adjustment unit may include rotation means which is fixed to the brake manipulation unit and rotates together according to rotation of the brake manipulation unit, sensing means which senses rotation of the rotation means to generate a voltage or current signal for adjusting a degree of operation of the regenerative braking unit, and fixing means which fixes the regenerative adjustment unit to a body of an electric vehicle.

According to another embodiment, the rotation means may include a rotation dog which is rotated by being fixed to the brake manipulation unit; the sensing means may include a displacement sensor module which senses a distance to the rotation dog to generate a voltage or current signal of a variable magnitude for adjusting a degree of operation of the regenerative braking unit depending on the distance; and the fixing means may include a fixing bracket which fixes the displacement sensor module to the body of the electric vehicle.

According to another embodiment, the sensing means may include a magnetic force generation module which moves according to rotation of the brake manipulation unit and generates a magnetic force, a Hall sensor which is fixed at a predetermined position to generate a voltage or current signal of a variable magnitude so as to adjust a degree of operation of the regenerative braking unit depending on a magnetic force varying by movement of the magnetic force generation module, and a sensing body which accommodates therein the magnetic force generation module and the Hall sensor.

According to another embodiment, the magnetic force generation module may include a regenerative magnet member which linearly moves on the Hall sensor according to rotation of the brake manipulation unit to generate a variable voltage or current signal; a magnet housing which accommodates therein the regenerative magnet member to be fixed and linearly moves inside the sensor body according to rotation of the brake manipulation unit; a connection member which connects the brake manipulation unit and the magnet housing to cause the magnet housing to linearly move according to rotation of the brake manipulation unit; and an elastic element which is fitted around the connection member to be compressively supported between an inside of the sensor body and the magnet housing.

According to another embodiment, the magnetic force generation module may further include a magnetic force maintenance member which is accommodated in the magnet housing so that ends of the magnetic force maintenance member and the regenerative magnet member which have the same polarity face each other, and is separated from the regenerative magnet member by a predetermined distance to linearly move together, so that magnetic force lines are secured.

According to another embodiment, the rotation means may include a rotation dog which is fixed to the brake manipulation unit to be rotated and is formed on an end of the connection member to cause movement of the connection member to be made according to rotation of the brake manipulation unit; the rotation dog may have a fitting groove which is formed to be depressed in a vertical direction and into which the connection member is fitted; and the connection member may include an engagement tip which is fitted into the fitting groove to move in the vertical direction, so that position adjustment of the rotation dog in the vertical direction is made possible.

According to another embodiment, surfaces of the fitting groove and the engagement tip which are brought into contact with each other may be formed to be rounded so that rotation of the engagement tip in a left-right direction in the fitting groove is possible.

According to another embodiment, the rotation means may include a rotation dog which is fixed to the brake manipulation unit to be rotated and is formed on an end of the connection member to cause movement of the connection member to be made according to rotation of the brake manipulation unit; the rotation dog may include an adjustment member which is connected to the brake manipulation unit and is inserted into the rotation dog to be fixed, and a support groove which is formed to be depressed on the rotation dog and into which the adjustment member is inserted; the support groove may include an insertion hole which is formed to pass through the support groove in an elliptical shape; the adjustment member may include an insertion projection which is inserted into the insertion hole and moves along the insertion hole; and the insertion hole may be formed in a lengthwise direction toward the sensing body to cause the insertion projection to move along the insertion hole so as to adjust a position of the rotation dog to be distant from or close to the sensing body.

According to another embodiment, the rotation means may include a support rotation part which is supported by the brake manipulation unit to move together according to rotation of the brake manipulation unit, and a rotation hinge part which is coupled to the support rotation part to rotate together and serves as a rotation shaft of the support rotation part; the sensing means may include a magnetic rotation body which rotates within a predetermined path according to rotation of the rotation hinge part to generate a magnetic force, and a sensor module which generates a variable voltage or current signal according to rotation of the magnetic rotation body; and the fixing means may include an upper fixing housing which supports the rotation means and is fixed to the body of the electric vehicle, and a lower housing which is coupled to a lower side of the upper fixing housing to form a closed space and accommodates the magnetic rotation body and the sensor module.

According to another embodiment, the electric vehicle braking manipulation system may further include rotation connection means which connects the rotation means and the sensing means; and the rotation connection means may rotate the magnetic rotation body only within an initial predetermined range when the rotation means rotates, and when the rotation means goes out of the predetermined range, may cause rotation of the rotation means to be made without exerting an influence on the magnetic rotation body.

According to another embodiment, the rotation connection means may include a rotation gear body which is brought into contact with the rotation hinge part to be meshed with the rotation hinge part and rotates in an opposite direction according to rotation of the rotation hinge part; and a connection rotation body which supports the rotation gear body, rotates together according to rotation of the rotation gear body only within an initial predetermined range of rotation of the rotation gear body and is meshed with the magnetic rotation body to rotate the magnetic rotation body.

According to another embodiment, the magnetic rotation body may include a rotation gear which rotates by being meshed with the connection rotation body, a magnetic member which is inserted along one side of the magnetic rotation body to generate a variable voltage or current signal in the sensor module according to rotation of the magnetic rotation body, and a pulling element which is formed between the magnetic rotation body and the lower housing to pull the magnetic rotation body; and the lower housing may include a sensor groove into which the sensor module is inserted to be fixed, a support shaft which serves as a rotation shaft of the magnetic rotation body, a fixing end which fixes the pulling element; a limiting projection which limits rotation of the magnetic rotation body, an insertion shaft which projects upward to be inserted into the connection rotation body and serves as a rotation shaft of the connection rotation body, and a limiting protrusion which protrudes upward to be inserted into the connection rotation body and limits rotation of the connection rotation body.

According to another embodiment, the rotation gear body may include a contact gear which rotates by being meshed with the rotation hinge part, and an insertion projection which projects at a point on a lower side to be inserted into the connection rotation body; the connection rotation body may include a shaft passage hole into which the insertion shaft is inserted; an insertion support hole into which the limiting protrusion is inserted, a guide groove which causes the insertion projection to move in a state in which the insertion projection is inserted into the guide groove, and a connection gear which rotates by being meshed with the rotation gear; the limiting protrusion may be caught in the insertion support hole to limit rotation of the connection rotation body when the magnetic rotation body is engaged with the limiting projection in the case where the rotation gear body rotates in a state in which the connection rotation body rotates with the insertion projection engaged with an end of the guide groove; and the guide groove may be formed along a movement path of the insertion projection according to rotation of the rotation gear body so that rotation of the rotation gear body is possible even after rotation of the connection rotation body is limited by the limiting protrusion.

According to another embodiment, the support rotation part may include a lever contact member which is brought into contact with the brake manipulation unit, and a rotation member which is coupled to the lever contact member to rotate together according to rotation of the brake manipulation unit; and the rotation member may include a plurality of coupling grooves into which the lever contact member is to be coupled, to adjust a position where the lever contact member is coupled.

According to another embodiment, the rotation member may include a plurality of insertion holes which pass through each coupling groove; and the lever contact member may include a coupling projection which projects downward and is inserted into one among the insertion holes, and may be formed in an elliptical shape to adjust a rotation path of the rotation member according to a position where the coupling projection is inserted.

According to another embodiment, the rotation hinge part may include a hinge member which is coupled to the support rotation part to rotate together; a hinge gear which projects on one side of the hinge member to be meshed with the rotation gear body; and a hinge spring fitted around the hinge member to be fixed to the lower housing and the hinge gear at both ends thereof and pulls the rotation hinge part to return the rotation gear part to an original position.

According to another embodiment, the regenerative operation unit may include a regeneration priority operation module which operates with priority over acceleration when the regenerative braking unit is operated by the brake manipulation unit, and an acceleration priority setting module which sets a speed range within which acceleration is performed with priority over the regenerative braking unit.

### Advantageous Effects

The present disclosure can achieve the following effects by a combination and use relationship of the embodiments described above and the configuration to be described below.

According to the present disclosure, since a mechanical braking unit and a regenerative braking unit are caused to be operated together by a brake manipulation unit, there is an effect that the easy and rapid operation of the regenerative braking unit is enabled, the configuration of a simple and inexpensive device is enabled and smooth braking without slipping together with a shortened braking distance is enabled.

According to the present disclosure, since the degree of operation of the regenerative braking unit is caused to be adjusted by rotating the brake manipulation unit, there is an effect that the adjustment of the operation of the regenerative braking unit can be easily carried out.

According to the present disclosure, since the degree of operation of the rechargeable braking unit is caused to be gradually and variably increased at an initial stage of rotation of the brake manipulation unit and the operations of the regenerative braking unit and the mechanical braking unit are caused to be simultaneously performed while maximally maintaining the degree of operation of the regenerative braking unit after a predetermined range of rotation of the brake manipulation unit, there is an effect that smooth and effective braking is enabled.

According to the present disclosure, since rotation means rotating together with the brake manipulation unit and sensor means detecting the rotation of the rotation means and generating a variable voltage or current signal are defined so as to increase the degree of operation of the regenerative braking unit according to the voltage or current signal, there is an effect that the adjustment of the operation of the regenerative braking unit can be accurately and stably carried out.

### Description of Drawings

FIG. 1 is a reference view for explaining an example of the operations of a conventional mechanical braking unit and regenerative braking unit.
FIG. 2 is of configuration and operation views of an electric vehicle braking manipulation system in accordance with an embodiment of the present disclosure.
FIG. 3 is of reference views illustrating an example in which the electric vehicle braking manipulation system in accordance with the embodiment of the present disclosure is applied to a foot brake.
FIG. 4 is of configuration and operation views of an electric vehicle braking manipulation system in accordance with another embodiment of the present disclosure.
FIG. 5 is of reference views illustrating an example in which the electric vehicle braking manipulation system in accordance with another embodiment of the present disclosure is applied to a foot brake.
FIG. 6 is of configuration and operation views of an electric vehicle braking manipulation system in accordance with still another embodiment of the present disclosure.
FIG. 7 is of reference views illustrating an example in which the electric vehicle braking manipulation system in accordance with the still another embodiment of the present disclosure is applied to a foot brake.
FIG. 8 is of reference views illustrating another example of FIG. 7.
FIG. 9 is of reference views illustrating the operation process of a regenerative adjustment unit of FIGS. 6 to 8.
FIG. 10 is an exploded perspective view of the regenerative adjustment unit of FIGS. 6 to 8.
FIG. 11 is of a perspective view (a) and a cross-sectional view (b) illustrating a rotation dog of the regenerative adjustment unit of FIGS. 6 to 8.
FIG. 12 is of views illustrating an adjustment member of the regenerative adjustment unit of FIGS. 6 to 8.
FIG. 13 is a side view of a connection member of the regenerative adjustment unit of FIGS. 6 to 8.
FIG. 14 is of reference views for explaining the operation principle of the regenerative adjustment unit of FIGS. 6 to 8.
FIG. 15 is a graph showing the generation of a voltage or current signal by the regenerative adjustment unit of FIGS. 6 to 8.
FIG. 16 is of photographs illustrating an example in which the electric vehicle braking manipulation system in accordance with the still another embodiment of the present disclosure is applied to a drum brake.
FIG. 17 is an exploded perspective view of a regenerative adjustment unit of an electric vehicle braking manipulation system in accordance with yet another embodiment of the present disclosure.
FIG. 18 is of a perspective view and a bottom view of a lever contact member of FIG. 17.
FIG. 19 is a perspective view of a rotation member of FIG. 17.
FIG. 20 is of perspective views of a rotation hinge part of FIG. 17.
FIG. 21 is of a top perspective view (a) and a bottom perspective view (b) of a magnetic rotation body of FIG. 17.
FIG. 22 is a bottom view illustrating a coupled state of the magnetic rotation body of FIG. 17.
FIG. 23 is a perspective view of a lower housing of FIG. 17.
FIG. 24 is of reference views illustrating rotation states of the magnetic rotation body in the lower housing of FIG. 23.
FIG. 25 is of a perspective view (a) and a side view (b) of a rotation gear body of FIG. 17.
FIG. 26 is of a top perspective view (a) and a bottom perspective view (b) of a connection rotation body of FIG. 17.
FIG. 27 is of reference views illustrating operation states of the rotation gear body and the connection rotation body of FIG. 17.
FIGS. 28 and 29 are of photographs and reference views for explaining the operation process of the regenerative adjustment unit of FIG. 17.
FIG. 30 is a block diagram showing the configuration of the regenerative adjustment unit.

### <Description of the Reference Numerals in the Drawings>

1: brake manipulation unit, 11: hand brake, 13: foot brake
3,3',3",3‴: regenerative adjustment unit, 31',31",31‴: rotation means
311',311": rotation dog, 311a": fitting groove, 311a-1": contact surface
311b": support groove, 311b-1": insertion hole, 311c": adjustment body
311c-1": insertion projection, 33',33",33‴: sensing means, 331': displacement sensor module
331": sensing body, 333": magnetic force generation module, 333a": magnet housing
333b": regenerative magnet member, 333c": magnetic force maintenance member, 333d": connection member
333d-1": engagement tip
333e": elastic element, 335": Hall sensor, 335a": sensing line
35',35",35‴: fixing means, 351',351": fixing bracket
311‴: support rotation part, 311a‴: lever contact member, 311a-1‴: surrounding surface
311a-2‴: coupling projection, 311a-3‴: coupling hole
311b‴: rotation member, 311b-1‴: coupling groove, 311b-2‴: insertion hole
311b-3‴: fitting groove, 313‴: rotation hinge part, 313a‴: hinge member
313a-1‴: release prevention protrusion, 313a-2‴: fitting projection
313b‴: hinge gear, 313b-1‴: spring coupling groove, 313c‴: hinge spring
331‴: magnetic rotation body, 331a‴: rotation gear, 331b‴: magnetic member
331c‴: fixing projection, 331d‴: engagement groove, 331e‴: pulling element
333‴: sensor module, 333a‴: sensor line
351‴: upper fixing housing, 351a‴: through hole, 351b‴: projecting protrusion
351c‴: protection cover, 353‴: lower housing, 353a''': sensor groove
353b‴: line insertion groove, 353c‴: support shaft, 353d‴: fixing end
353e‴: limiting projection, 353f‴: insertion shaft, 353g‴: limiting protrusion
371‴: rotation gear body, 371a‴: contact gear, 371b‴: insertion projection
373‴: connection rotation body, 373a‴ shaft passage hole, 373b‴: insertion support hole
373c‴: guide groove, 373d‴: connection gear
5: regenerative operation unit, 51: voltage value reception module, 53: regenerative braking module
55: regeneration priority operation module, 57: acceleration priority setting module

### Best Mode

Hereafter, exemplary embodiments of an electric vehicle braking manipulation system according to the present disclosure will be described in detail with reference to the accompanying drawings. In the following description of the present disclosure, detailed descriptions of well-known functions or configurations relating to the present disclosure will not be provided so as not to obscure the point of the present disclosure with unnecessary details. Throughout the present specification, unless explicitly described otherwise, "comprising" any components will be understood to imply the inclusion of other components rather than the exclusion of any other components. Furthermore, the terms "~ part", "module", and the like mean a unit for processing at least one function or operation and may be implemented by hardware or software or by a combination of hardware and software.

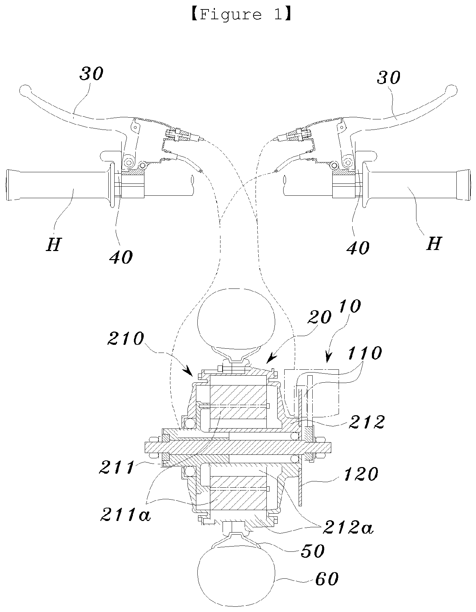

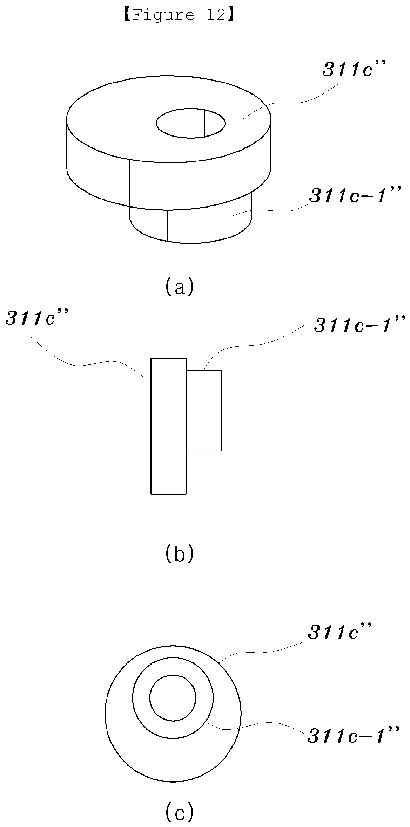

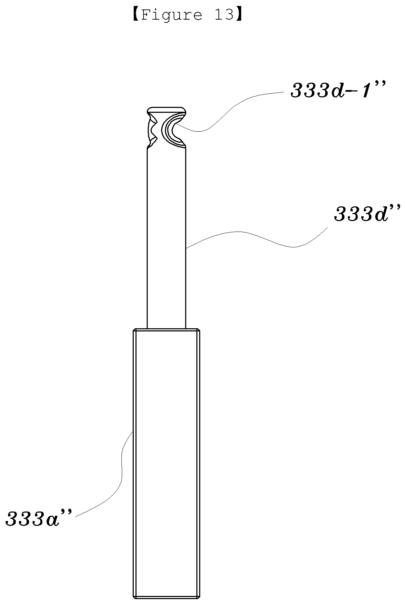

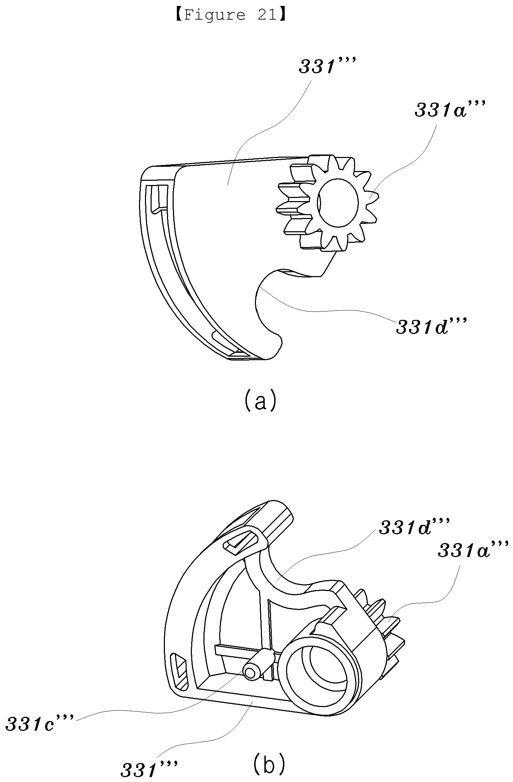

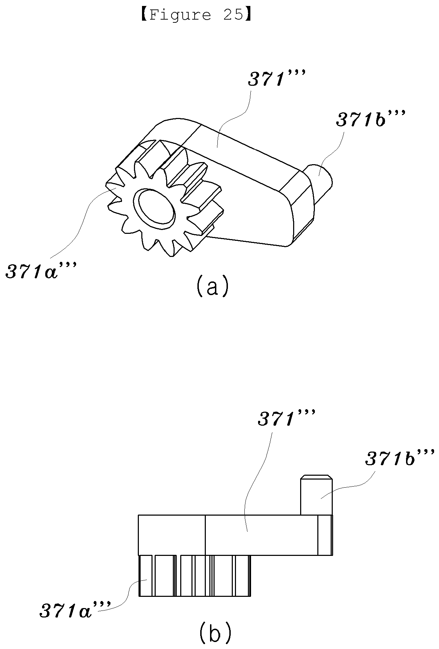

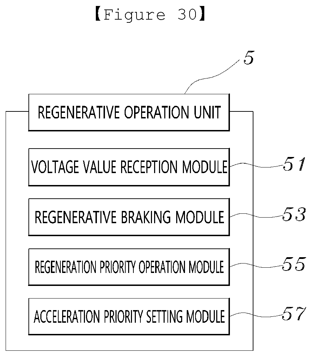

The electric vehicle braking manipulation system according to the present disclosure will be described below with reference to FIGS. 1 to 30. The electric vehicle braking manipulation system includes a brake manipulation unit 1 which is rotated by the hand or foot of an electric vehicle driver to operate a mechanical braking unit 10; a regenerative operation unit 5 which operates a regenerative braking unit 20 according to the rotation of the brake manipulation unit 1; and a regenerative adjustment unit 3 which adjusts the degree of operation of the regenerative braking unit 20 according to the rotation of the brake manipulation unit 1.

The electric vehicle braking manipulation system according to the present disclosure may be formed in an electric motorcycle, an electric scooter, an electric bicycle or an electric kickboard in which the brake manipulation unit 1 is formed on a handle H or in an electric automobile in which the brake manipulation unit 1 is formed to be rotated by being pressed by a driver's foot. Hereinafter, an electric motorcycle, an electric scooter, an electric bicycle, an electric kickboard, an electric automobile and other means of transportation are collectively referred to as 'electric vehicles'. In particular, the electric vehicle braking manipulation system causes the mechanical braking unit 10 and the regenerative braking unit 20 to be simultaneously operated according to the rotation of the brake manipulation unit 1, thereby enabling easy and effective braking. In addition, the electric vehicle braking manipulation system causes the degree of operation of the regenerative braking unit 20 to be adjusted according to the rotation of the brake manipulation unit 1. In particular, the electric vehicle braking manipulation system causes the degree of operation of the regenerative braking unit 20 to be gradually increased from initial rotation of the brake manipulation unit 1, and when the rotation of the brake manipulation unit 1 goes out of a predetermined range, causes the regenerative braking unit 20 to be operated together with the mechanical braking unit 10 while maintaining a maximum degree of operation, thereby enabling effective and efficient braking by shortening of a braking distance along with smooth braking of an electric vehicle.

In the present disclosure, the mechanical braking unit 10 is a device which implements a principle that braking is applied by removing the kinetic energy of a wheel using a frictional force. Describing this with reference to FIG. 1, a brake pad 110 is disposed on each of both sides of a disc 120 which is attached to one side of a rotor 212 mounted inside the wheel of the electric vehicle to be rotated in an interlocked manner together with the rotor 212. The brake pad 110 is kept separated from the disc 120 in an acceleration situation by the operation control of a mechanical manipulation device 30. When the mechanical manipulation device 30 is pulled for braking, the brake pad 110 is pushed against the disc 120 on each of both sides of the disc 120 by a hydraulic pressure of a hydraulic device (not illustrated). By this fact, the kinetic energy of the rotor 212, a rim 60 attached thereto and a wheel 60 is converted into heat energy through the frictional force between the disc 120 and the brake pad 110 so that the kinetic energy is removed and then braking is performed.

The regenerative braking unit 20 is a device which implements a principle that braking is applied by removing the kinetic energy of the wheel as inertia moment energy of the vehicle while converting and absorbing the kinetic energy into electrical energy (which is referred to as 'regenerative braking'). An electric motor 210 which provides a driving force by generally converting electrical energy into kinetic energy may operate as the regenerative braking unit 20 which applies braking while charging a battery by conversely converting and absorbing kinetic energy into electrical energy. Describing this with reference to FIG. 1, the general electric motor 210 is composed of a stator 211 on which an armature coil 211a is wound and the rotor 212 to which a permanent magnet 212a is attached. The electric motor 210 operates in a principle that a driving force is provided as the permanent magnet 212a and the rotor 212 are rotated by a magnetic field created when electricity is applied to the armature coil 211a. By conversely using such a principle, when the kinetic energy of the rotor 212 is converted into electrical energy (i.e., when the armature coil 211a generates electrical energy using the rotating permanent magnet 212a to effect power generation), the kinetic energy is removed so that the rotation of the rotor 212, the rim 50 attached thereto and the wheel 60 is stopped to apply braking. The regenerative braking unit 20 means a configuration in which, by using the kinetic energy of the rotating rotor 212 and permanent magnet 212a as described above, the armature coil 211a generates electrical energy to effect power generation and thereby the kinetic energy is removed so that the rotation of the rotor 212, the rim 50 attached thereto and the wheel 60 is stopped to apply braking. The magnitude of a power generation amount is proportional to the magnitudes of a speed and inertia, and a braking force is generated in proportion to the recharging amount of a battery according to the magnitude of the power generation amount, that is, the magnitude of a current supplied to the battery. The electrical energy generated by the regenerative braking unit 20 is charged in a separate battery (not illustrated), and is utilized later as electrical energy for operating the electric motor 210. As illustrated in FIG. 1, in the conventional art, the regenerative braking unit 20 is operated according to the manipulation of a separate regenerative manipulation device 40, but there is a problem in that the manipulation is inconvenient and it is difficult to adjust the degree of braking. In the present disclosure, the simultaneous operation of the mechanical braking unit 10 and the regenerative braking unit 20 through the brake manipulation unit 1 and the adjustment of the degree of operation are made possible, and as a braking force is remarkably increased, a braking time may be shortened.

The brake manipulation unit 1 is a component which brakes the electric vehicle as the driver rotates the brake manipulation unit 1 by hand or foot. The brake manipulation unit 1 includes both a hand brake 11 which is formed on an electric motorcycle, etc. as described above to be operated by the driver's hand and a foot brake 13 which is formed in an electric automobile, etc. as described above to be operated by the driver's foot. In particular, the brake manipulation unit 1 is formed in the same shape as that for operating only the mechanical braking unit 10 in the conventional art, but may simultaneously operate the mechanical braking unit 10 and the regenerative braking unit 20 by the regenerative adjustment unit 3 and the regenerative operation unit 5. In particular, the brake manipulation unit 1 simultaneously operates the regenerative braking unit 20 and the mechanical braking unit 10 by being pulled or pressed by the driver. According to the degree of pulling or pressing by the driver (hereinafter referred to as the 'degree of rotation'), the brake manipulation unit 1 causes the degree of braking of the regenerative braking unit 20 to be increased, and when the brake manipulation unit 1 is rotated to a predetermined range, the brake manipulation unit 1 causes the regenerative braking unit 20 to be continuously operated together with the mechanical braking unit 10 while maintaining the regenerative braking unit 20 at the maximum degree of braking. Accordingly, the brake manipulation unit 1 may cause the operation of the regenerative braking unit 20 to be very easily and conveniently performed, and by causing the initial operation of a brake to be performed by the regenerative braking unit 20, the brake manipulation unit 1 enables energy to be recovered, thereby enabling efficient driving. In addition, since the degree of operation of the regenerative braking unit 20 may also be adjusted through the operation of the brake manipulation unit 1 as in the conventional art, the degree of operation of the regenerative braking unit 20 may be adjusted very conveniently and accurately, and the configuration of a device may be made simple. Since the degree of operation of the regenerative braking unit 20 may be gradually increased, smooth braking may be achieved together with effective braking. Furthermore, since the regenerative braking unit 20 and the mechanical braking unit 10 are automatically and simultaneously operated after the predetermined range of rotation of the brake manipulation unit 1, effective and efficient braking may be achieved.

The regenerative adjustment unit 3 is a component which adjusts the degree of operation of the regenerative braking unit 20, and causes the degree of operation to be adjusted according to the rotation of the brake manipulation unit 1. The degree of operation of the regenerative braking unit 20 means an amount of current supplied to the battery through the operation of the regenerative braking unit 20, and by adjusting the amount of current, supplied to the battery, according to the voltage signal transferred by the regenerative adjustment unit 3, the degree of braking is adjusted. In particular, the regenerative adjustment unit 3 may increase the degree of braking by increasing a voltage or current generated according to the degree of rotation of the brake manipulation unit 1, and causes smooth braking to be performed, by gradually increasing a voltage or current as the degree of rotation of the brake manipulation unit 1 increases. At the initial rotation of the brake manipulation unit 1, the regenerative adjustment unit 3 causes efficient and smooth braking capable of recovering energy to be performed as the degree of operation of the regenerative braking unit 20 is increased, and after a predetermined degree of rotation of the brake manipulation unit 1, causes the regenerative braking unit 20 to operate together with the conventional mechanical braking unit 10 while maintaining the maximum degree of operation of the regenerative braking unit 20, thereby also enabling effective braking. To this end, the regenerative adjustment unit 3 may include rotation means 31 which rotates together according to the rotation of the brake manipulation unit 1, sensing means 33 which recognizes the rotation of the rotation means 31 to generate a voltage or current signal, and fixing means 35 which fixes the regenerative adjustment unit 3 to the electric vehicle. Accordingly, the regenerative adjustment unit 3 causes the sensing means 33 to generate a voltage or current signal which increases up to a predetermined range, as the degree of rotation of the brake manipulation unit 1 increases, and when the brake manipulation unit 1 rotates beyond the predetermined range, causes a maximum voltage or current signal to be continuously generated so as to maintain the maximum degree of braking of the regenerative braking unit 20. While the sensing means 33 may generate a voltage or current signal, but is not limited thereto. The sensing means 33 may generate a voltage or current signal of a variable magnitude.

The rotation means 31, the sensing means 33 and the fixing means 35 may be formed to have various shapes, but hereinafter, descriptions will be made for various embodiments in which they are formed on the handle H so that the degree of operation of the regenerative braking unit 20 is adjusted by the operation of the hand brake 11 and in which the degree of operation of the regenerative braking unit 20 is adjusted by the foot brake 13 capable of being rotated by being pushed by the driver's foot. However, the present disclosure is not limited to these embodiments, and may include various embodiments implementing the technical spirit of the present disclosure.

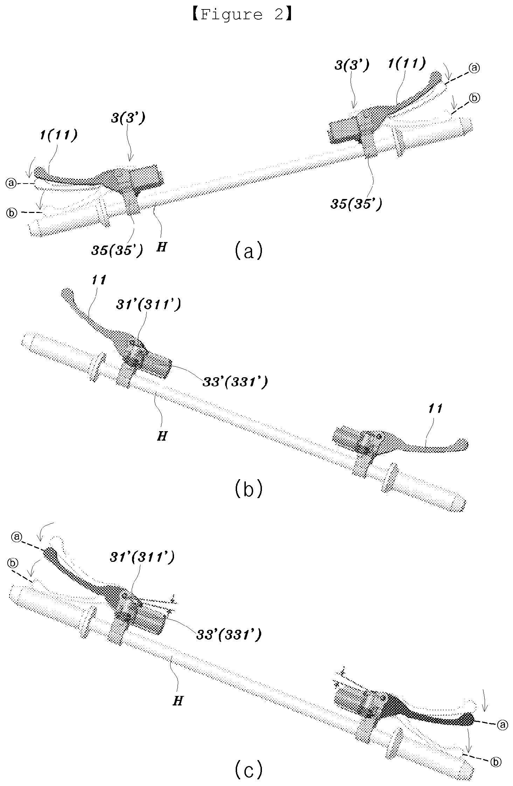

Describing a first embodiment of a regenerative adjustment unit 3' with reference to FIGS. 2 to 5, first, rotation means 31' includes a rotation dog 311' which is fixed to the brake manipulation unit 1 and rotates together with the brake manipulation unit 1. The rotation dog 311' may be coupled to the brake manipulation unit 1 by being bent at a predetermined angle, and may rotate together with the brake manipulation unit 1. The rotation dog 311' is formed to maintain a state in which it is brought into close contact with a displacement sensor module 331' of sensing means 33' when the brake manipulation unit 1 is not operated and to become distant from the displacement sensor module 331' according to the rotation of the brake manipulation unit 1.

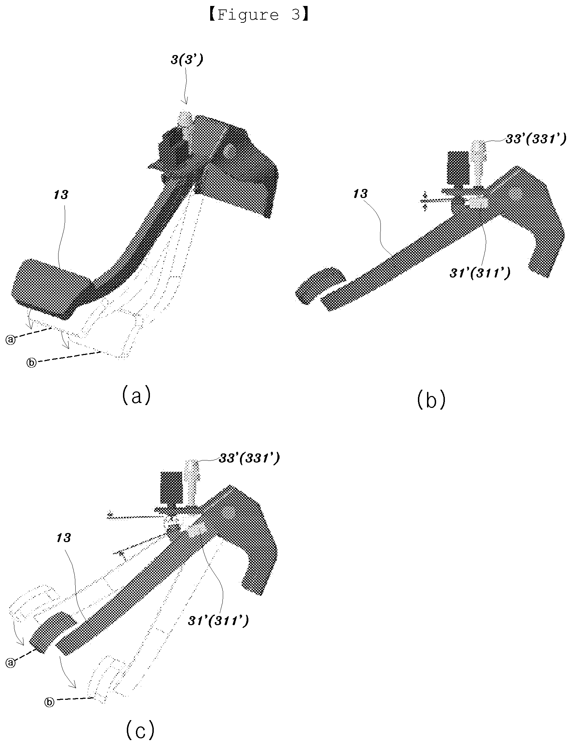

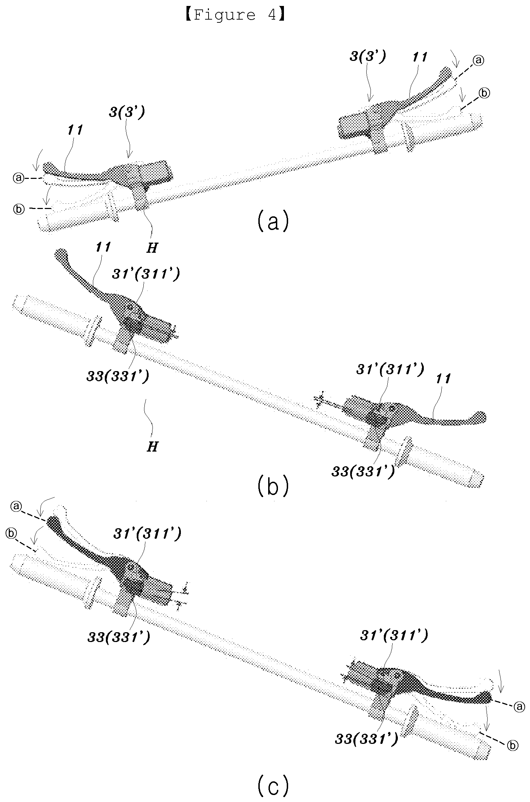

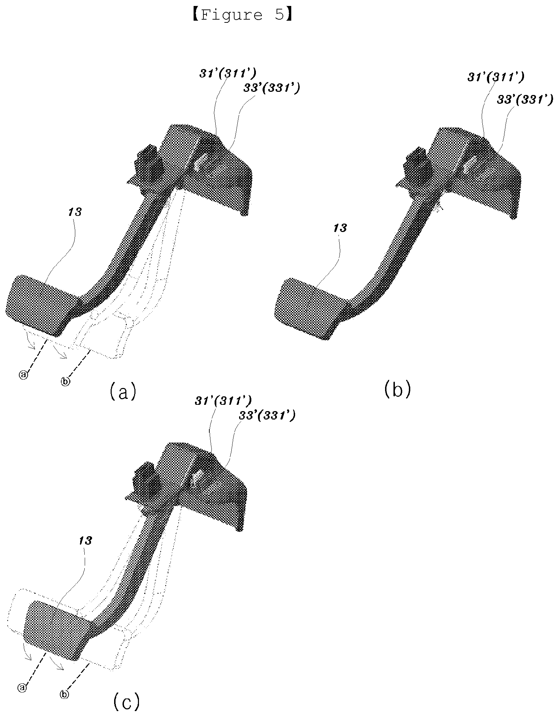

The sensing means 33' may include the displacement sensor module 331' which generates a voltage or current signal variable according to a distance from the rotation dog 311'. As the displacement sensor module 331', various sensor modules capable of sensing a distance from the rotation dog 311' may be applied. The displacement sensor module 331' may be formed as a circular sensor module as illustrated in FIGS. 2 and 3 or may be formed as a quadrangular sensor module as illustrated in FIGS. 4 and 5, but an operation principle is the same. The displacement sensor module 331' maintains a state in which it is brought into close contact with the rotation dog 311' when the brake manipulation unit 1 is not operated, and generates a voltage signal or a current signal which increases as the rotation dog 311' gradually becomes distant according to the rotation of the brake manipulation unit 1. The displacement sensor module 331' may generate a voltage or current signal of various ranges such as 0-5V, 0-10V and 4-10mA to gradually increase until the rotation dog 311' becomes distant to a predetermined range, and may maintain the maximum degree of operation of the regenerative braking unit 20 by causing a maximum voltage or current signal to be continuously generated at a range equal to or greater than the predetermined range.

Fixing means 35' may include a fixing bracket 351' which is fixed to the electric vehicle, and fixes the displacement sensor module 331' to the body of the electric vehicle. The fixing bracket 351' may fix the displacement sensor module 331' to the handle H of the electric vehicle, and may be formed into various shapes which can be fixed to the handle H.

Describing the operation of the regenerative adjustment unit 3 according to the present embodiment with reference to FIGS. 2 to 5, as illustrated in FIG. 2, when the rotation dog 311' is formed to rotate together with the hand brake 11, the rotation dog 311' becomes distant from the displacement sensor module 331' according to the rotation of the hand brake 11. When the hand brake 11 is not operated, as illustrated in FIG. 2(b), the rotation dog 311' maintains a state in which it is brought into close contact with the displacement sensor module 331'. According to the rotation of the hand brake 11, the rotation dog 311' becomes distant from the displacement sensor module 331' as illustrated in FIG. 2(c). When the rotation dog 311' becomes distant to a first position ⓐ, the displacement sensor module 331' generates a gradually increasing voltage or current signal to increase the degree of operation of the regenerative braking unit 20, and, from the position ⓐ to a second position ⓑ, the displacement sensor module 331' causes the regenerative braking unit 20 to operate together with the mechanical braking unit 10 while maintaining the maximum degree of operation of the regenerative braking unit 20. In all embodiments below, the first position ⓐ means a position where the brake manipulation unit 1 rotates to maximize the degree of operation of the regenerative braking unit 20, and the second position ⓑ means a position to which the brake manipulation unit 1 may maximally rotate. The case of FIG. 3 as a case where the rotation dog 311' is mounted on the foot brake 13 has the same operation principle as described above with reference to FIG. 2, and the case of FIG. 4 as a case where a quadrangular displacement sensor module 311' is applied also has the same operation principle as described above with reference to FIG. 2. However, although the case of FIG. 5 is a case where the rotation dog 311' is mounted on the foot brake 13, but unlike FIG. 3, the rotation dog 311' may be formed on the side surface of the foot brake 13. In this case, when the foot brake 13 is not operated, the rotation dog 311' maintains a state in which it faces in parallel the displacement sensor module 331' as illustrated in FIG. 5(b). As the rotation dog 311' rotates together according to the rotation of the foot brake 13, an angle formed between the rotation dog 311' and the displacement sensor module 331' is changed. Accordingly, the displacement sensor module 331' may generate a voltage or current signal which increases up to a predetermined range, to increase the degree of operation of the regenerative braking unit 20.

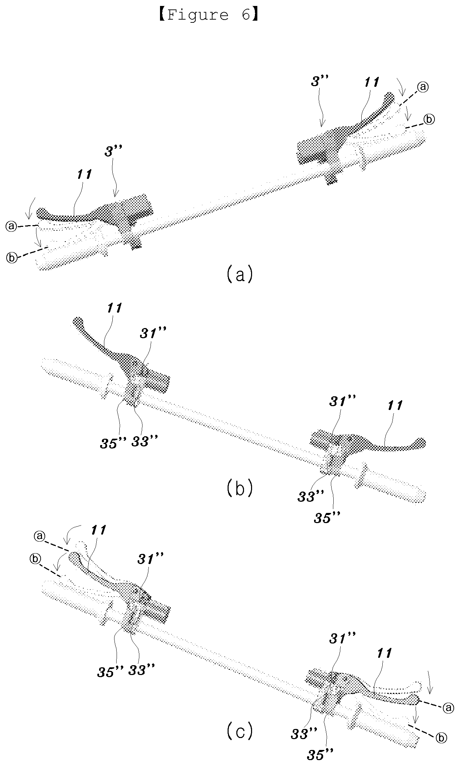

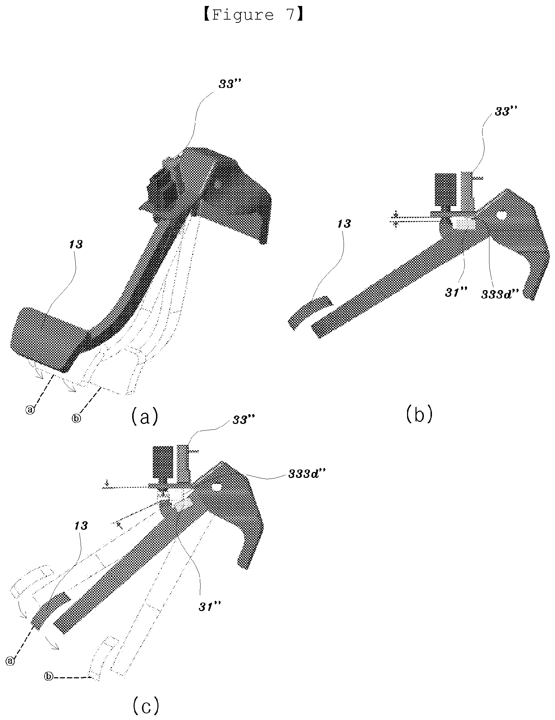

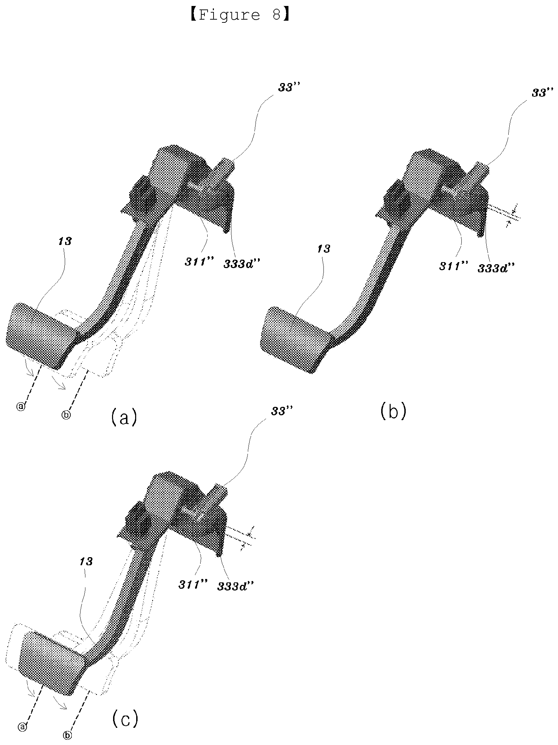

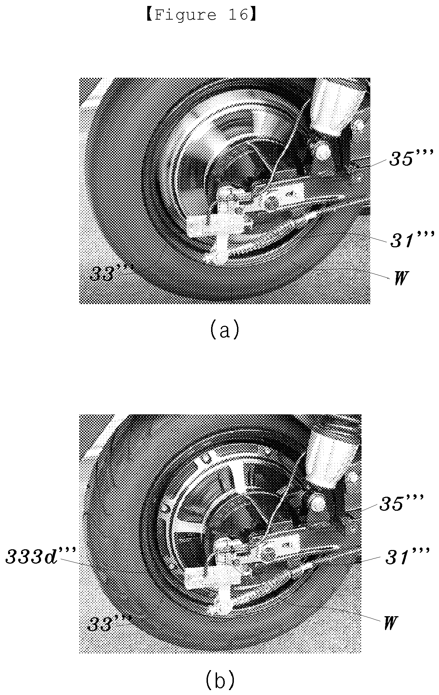

Describing a second embodiment of a regenerative adjustment unit 3" with reference to FIGS. 6 to 16, rotation means 31" and sensing means 33" may include a rotation dog 311" and a fixing bracket 351" in the same manner as in the first embodiment. However, the sensing means 33" includes a magnetic body which is directly connected to the rotation dog 311" in order to more stably generate a voltage or current signal varying according to the rotation of the rotation dog 311", and may generate a voltage or current signal varying according to the movement of the magnetic body to adjust the degree of operation of the regenerative braking unit 20. The regenerative adjustment unit 3'' according to the present embodiment may be formed on the hand brake 11 as illustrated in FIG. 6, or may be formed on the foot brake 13 as illustrated in FIGS. 7 and 8. In particular, in the embodiment of FIG. 8, the rotation dog 311" may be formed on the side surface of the foot brake 13 in the shape of a circular plate which rotates in place according to the rotation of the foot brake 13, and a connection member 333d", to be described later, of the sensing means 33" may be pulled or pushed according to the rotation of the rotation dog 311". As illustrated in FIG. 16, the regenerative adjustment unit 3" may be configured to be applied to a drum brake and be connected to a wire W for operating the brake, on one side of a wheel. However, in all the cases illustrated in FIGS. 6 to 8, by the same operation principle as in the first embodiment, the sensing means 33" generates a voltage or current signal which gradually increases up to a first position ⓐ to gradually increase the degree of operation of the regenerative braking unit 20, and maintains a maximum voltage or current signal from the first position ⓐ to a second position ⓑ to cause the regenerative braking unit 20 to maintain a maximum degree of operation.

The rotation means 31" includes the rotation dog 311" as in the first embodiment. In the present embodiment, the rotation dog 311" moves a magnetic force generation module 333" to be described later, so that a voltage or current signal for adjusting the operation of the regenerative braking unit 20 is generated. Therefore, in order to enable the generation of an accurate signal, the rotation dog 311" includes a fitting groove 311a", a support groove 311b" and an adjustment member 311c' ' .

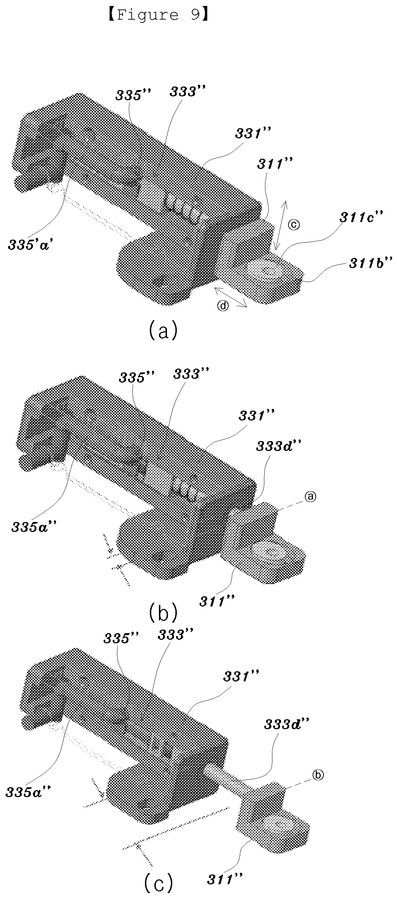

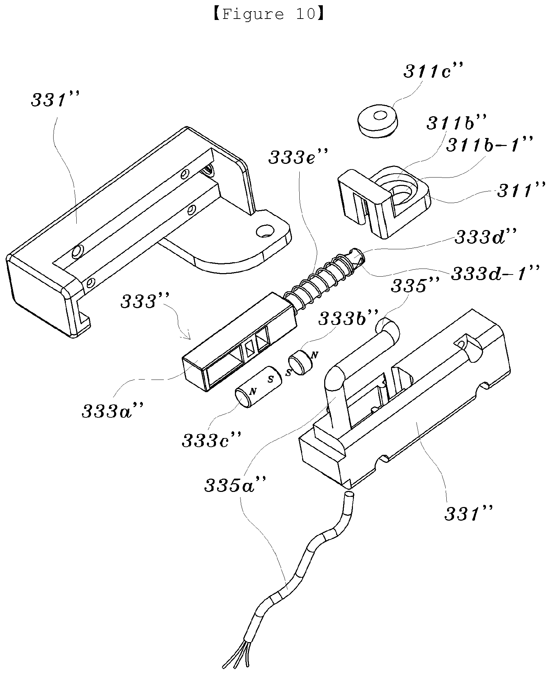

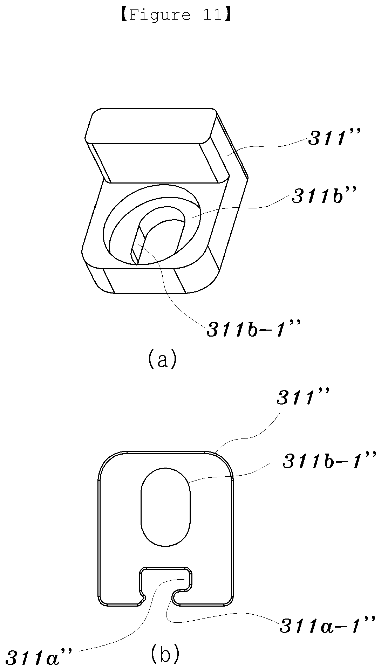

As illustrated in FIGS. 10 and 11, the fitting groove 311a" is formed to be depressed in a vertical direction on a surface where the rotation dog 311" is connected to the connection member 333d". Accordingly, an engagement tip 333d-1", to be described later, of the connection member 333d" may be inserted into the fitting groove 311a" to be moved in the vertical direction along the fitting groove 311a", and through this, as illustrated in FIG. 9, the position of the rotation dog 311" in a vertical direction ⓒ may be adjusted. Accordingly, in the present disclosure, the vertical position of the rotation dog 311" may be adjusted depending on a type of the brake manipulation unit 1 and an installation position of a sensing body 331", so that the accurate generation of a signal by the sensing means 33" may be ensured through the accurate setting of an origin. As illustrated in FIG. 11(b), in the fitting groove 311a", a contact surface 311a-1" with which the engagement tip 333d-1" is engaged is formed to be rounded at an entrance to the fitting groove 311a", and a space in which the engagement tip 333d-1" may be rotated in a left-right direction is formed in the fitting groove 311a" so that the rotation of the rotation dog 311" in the left-right direction is possible. This is because, since the rotation dog 311" rotates together in a circle according to the rotation of the brake manipulation unit 1, the rotation of the rotation dog 311" should be possible in order to transfer the rotation of the rotation dog 311" into the linear movement of the sensing means 33". Accordingly, as the magnetic force generation module 333" naturally moves linearly according to the rotation of the rotation dog 311", an accurate voltage or current signal may be generated.

As illustrated in FIG. 9, the support groove 311b" and the adjustment member 311c" are components for enabling the position adjustment of the rotation dog 311" in a front-rear direction ⓓ. The support groove 311b" is formed as a circular groove which is depressed by a predetermined depth on one surface of the rotation dog 311", preferably, the upper surface of the rotation dog 311". The adjustment member 311c" is inserted into and fixed in the support groove 311b", and an elliptical insertion hole 311b-1" is formed in the support groove 311b" to be elongate in the front-rear direction. An insertion projection 311c-1" of the adjustment member 311c" is inserted into the insertion hole 311b-1" to be moved in the front-rear direction so that the adjustment member 311c" is fixed to the rotation dog 311" at an appropriate position. The adjustment member 311c" is fixed to the rotation dog 311" in a state in which the insertion projection 311c-1" is inserted into the insertion hole 311b-1", and the brake manipulation unit 1 is connected and fixed to the adjustment member 311c". Therefore, the rotation dog 311" may be adjusted in its position in the front-rear direction depending on an installation state of the sensing means 33" to enable the accurate setting of an origin, so that the accurate generation of a voltage or current signal for operating the regenerative braking unit 20 may be ensured.

The sensing means 33" is a component which generates a voltage or current signal for adjusting the operation of the regenerative braking unit 20 according to the rotation of the rotation dog 311" according to the rotation of the brake manipulation unit 1, and as illustrated in FIG. 10, may include the sensing body 331", the magnetic force generation module 333" and a Hall sensor 335".

The sensing body 331" is a component which forms the outer shape of the sensing means 33", accommodates therein the magnetic force generation module 333" and the Hall sensor 335", and is fixed by fixing means 35".

The magnetic force generation module 333" is moved together with the rotation of the rotation dog 311" which rotates together with the brake manipulation unit 1, to change a magnetic force so that a variable voltage or current signal is generated through the Hall sensor 335". To this end, the magnetic force generation module 333" includes a magnet housing 333a", a regenerative magnet member 333b", a magnetic force maintenance member 333c", the connection member 333d" and an elastic element 333e".

The magnet housing 333a" accommodates the regenerative magnet member 333b" and the magnetic force maintenance member 333c", and is connected to the rotation dog 311" to be moved in the sensing body 331" according to the rotation of the rotation dog 311". The magnet housing 333a" is connected to the rotation dog 311" by the connection member 333d", and is supported by the elastic element 333e" fitted around the connection member 333d" to be maintained in a fixed state in the sensing body 331". The magnet housing 333a" is pulled as the rotation dog 311" becomes distant from the sensing body 331" when the brake manipulation unit 1 is operated, and a position where the regenerative magnet member 333b" and the magnetic force maintenance member 333c" accommodated in the magnet housing 333a" are brought into contact with the Hall sensor 335" is changed so that a variable voltage or current signal may be generated through the Hall sensor 335".

The regenerative magnet member 333b" is a component which is accommodated in the magnet housing 333a" and is moved together with the magnet housing 333a", and may be formed of a magnetic material which N and S poles. According to a position where the regenerative magnet member 333b" passes by the Hall sensor 335", a variable voltage or current signal may be generated through the Hall sensor 335".

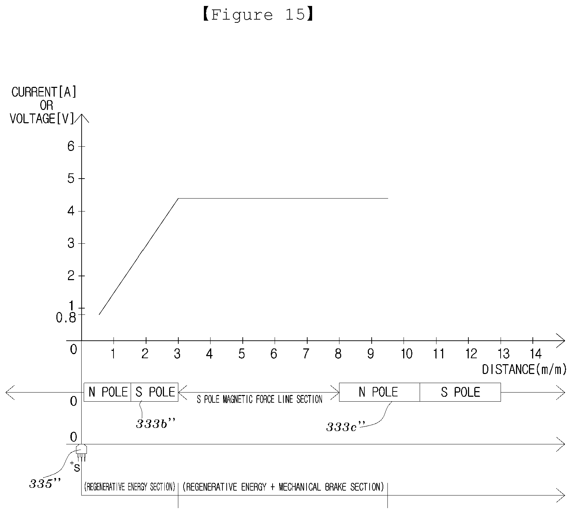

The magnetic force maintenance member 333c" is accommodated in the magnet housing 333a" to be spaced apart from the regenerative magnet member 333b" by a predetermined interval. The magnetic force maintenance member 333c" is accommodated so that the magnetic force maintenance member 333c" and the regenerative magnet member 333b" which have the same polarity face each other, and is spaced apart from the regenerative magnet member 333b" by a sufficient distance. The magnetic force maintenance member 333c" is moved together with the magnet housing 333a". As shown in FIG. 15, while the regenerative magnet member 333b" passes by the Hall sensor 335", a voltage or current signal which gradually increases is generated through the Hall sensor 335". In order to ensure that even after the regenerative magnet member 333b" passes by the Hall sensor 335", a maximum voltage or current signal is maintained to maintain the maximum degree of operation of the regenerative braking unit 20, the magnetic force maintenance member 333c" is inserted into the magnet housing 333a" so that a pole, preferably, an S pole, faces the regenerative magnet member 333b". Through this, the magnetic force line section of the S pole may be secured to be long so that a maximum voltage or current signal may be continuously maintained.

The connection member 333d" is a component which connects the magnet housing 333a" and the rotation dog 311". As the rotation dog 311" becomes distant from the sensing body 331", the connection member 333d" is pulled by the rotation dog 311" to move the magnet housing 333a". The elastic element 333e" is fitted around the connection member 333d" so that the magnet housing 333a" can be automatically returned to its original position when the brake manipulation unit 1 is not operated. The rotation dog 311" has a shape which is not moved in a straight line direction but rotates together according to the rotation of the brake manipulation unit 1. Therefore, in order to ensure that the connection member 333d" is naturally moved in a straight line direction according to the rotation of the rotation dog 311" so that the generation of a voltage or current signal according to the movement of the magnet housing 333a" is smoothly enabled, as illustrated in FIG. 10, the engagement tip 333d-1", which is formed to be rounded, is formed at the distal end of the connection member 333d" and is fitted into the fitting groove 311a" of the rotation dog 311". The engagement tip 333d-1" is formed to be rounded, and is brought into contact with the rounded contact surface 311a-1" of the fitting groove 311a". The engagement tip 333d-1" may be rotated in the left-right direction in the fitting groove 311a'', so that natural linear movement of the connection member 333d" can be made according to the rotation of the rotation dog 311".

The elastic element 333e" is fitted around the connection member 333d", and is inserted between the inner side of the sensing body 331" and the magnet housing 333a" to be in a compressed state. Accordingly, the elastic element 333e" may cause the magnet housing 333a" to be maintained in a state in which it is fixed in the sensing body 331" when the brake manipulation unit 1 is not operated, and is compressed only when the brake manipulation unit 1 is operated, so that the movement of the magnet housing 333a" is enabled.

The Hall sensor 335" is a component which generates a voltage or current signal according to the magnetic force generated by the regenerative magnet member 333b" and the magnetic force maintenance member 333c". More specifically, as the regenerative magnet member 333b" is moved along the magnet housing 333a", a position where the regenerative magnet member 333b" is brought into contact with the Hall sensor 335" is changed. Thus, a voltage or current signal which varies according to the movement of the regenerative magnet member 333b" is generated through the Hall sensor 335". As a voltage or current signal which gradually increases is generated according to the movement of the regenerative magnet member 333b", the degree of operation of the regenerative braking unit 20 can be increased. After the regenerative magnet member 333b" passes, the Hall sensor 335" may maintain a maximum voltage or current signal to the second position ⓑ. The Hall sensor 335" transfers the generated voltage or current signal to the regenerative operation unit 5 through a sensing line 335a", so that the operation of the regenerative braking unit 20 can be performed according to the generated voltage or current signal.

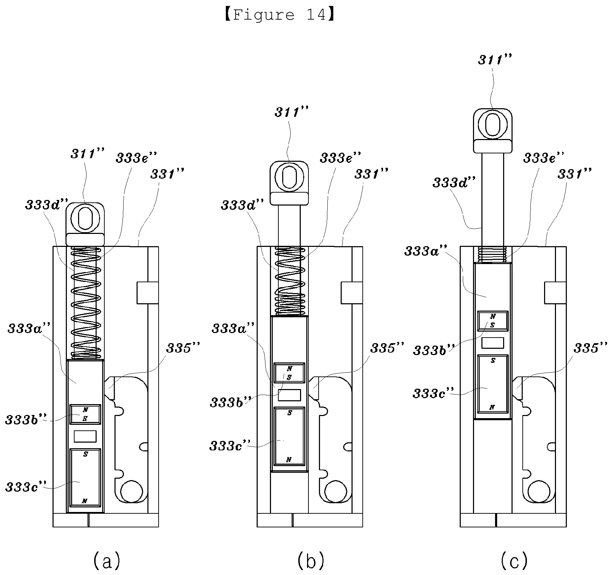

Describing the operation of the regenerative adjustment unit 3" according to the present embodiment with reference to FIG. 14, when the brake manipulation unit 1 is not operated, as illustrated in FIG. 14(a), the rotation dog 311" is maintained in a state in which it is brought into close contact with the sensing body 331". When the brake manipulation unit 1 is rotated to the first position ⓐ illustrated in FIGS. 6 to 9, as illustrated in FIG. 14(b), the magnet housing 333a" is moved along with the rotation dog 311", and the regenerative magnet member 333b" in the magnet housing 333a" passes by the Hall sensor 335". The Hall sensor 335" generates a voltage or current signal which gradually increases until the brake manipulation unit 1 passes through the first position ⓐ. When the brake manipulation unit 1 is rotated from the first position ⓐ to the second position ⓑ, as illustrated in FIG. 14(c), the magnet housing 333a" is further pulled, and the Hall sensor 335" continuously maintains a maximum voltage or current signal which is generated at the first position ⓐ, so that the regenerative braking unit 20 is operated together with the mechanical braking unit 10 while continuously maintaining the maximum degree of operation to the second position ⓑ.

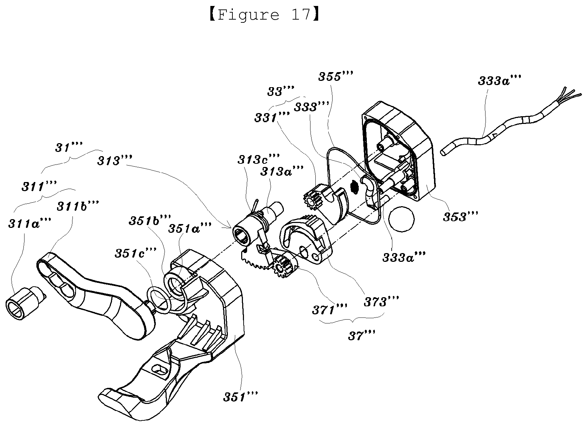

Describing a third embodiment of a regenerative adjustment unit 3‴ with reference to FIGS. 17 to 29, the regenerative adjustment unit 3‴ according to the present embodiment also includes rotation means 31‴, sensing means 33‴ and fixing means 35‴, but has a configuration different from those of the above-described embodiments and additionally includes rotation connection means 37‴. By the same operation principle as the first and second embodiments, the regenerative adjustment unit 3‴ causes the degree of operation of the regenerative braking unit 20 to be gradually increased through an increasing voltage or current signal of the sensing means 33‴ up to a first position ⓐ, and from the first position ⓐ to a second position ⓑ, causes the maximum degree of operation of the regenerative braking unit 20 to be maintained and causes the regenerative braking unit 20 to operate together with the mechanical braking unit 10. The regenerative adjustment unit 3‴ causes the rotation means 31‴, the sensing means 33‴, the fixing means 35‴ and the rotation connection means 37‴ to form an integrally coupled shape, so that more stable and accurate operation is possible.

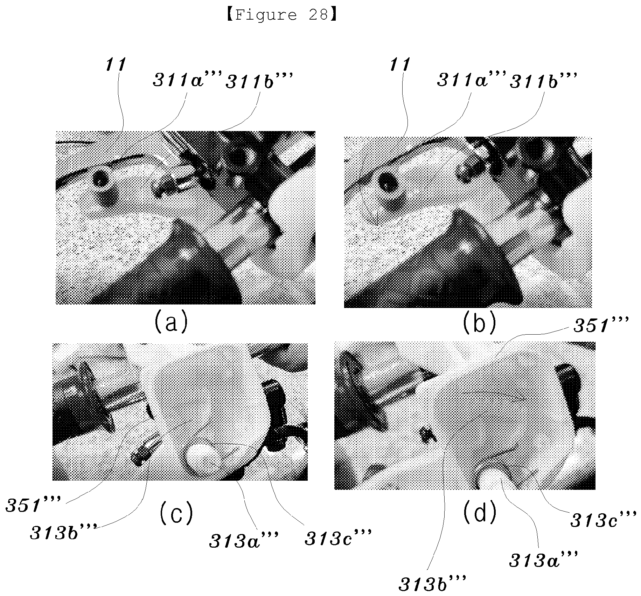

The rotation means 31‴ is a component which rotates together according to the rotation of the brake manipulation unit 1, and as illustrated in FIGS. 28 (a) and (b), may be formed to be brought into contact with the handle H of the electric vehicle so as to rotate together. To this end, the rotation means 31‴ may include is a support rotation part 311‴ which is brought into contact with the handle H to rotate, and a rotation hinge part 313‴ which is coupled to the support rotation part 311‴ to rotate together and rotates the rotation connection means 37‴.

The support rotation part 311‴ is a component which is brought into contact with the handle H to rotate. The degree of rotation of the support rotation part 311‴ may be adjusted depending on the shape of the handle H and a rotation angle, so that the accurate operation of the regenerative adjustment unit 3‴ is made possible regardless of the shape of the handle H. To this end, the support rotation part 311‴ may include a lever contact member 311a‴ and a rotation member 311b‴.

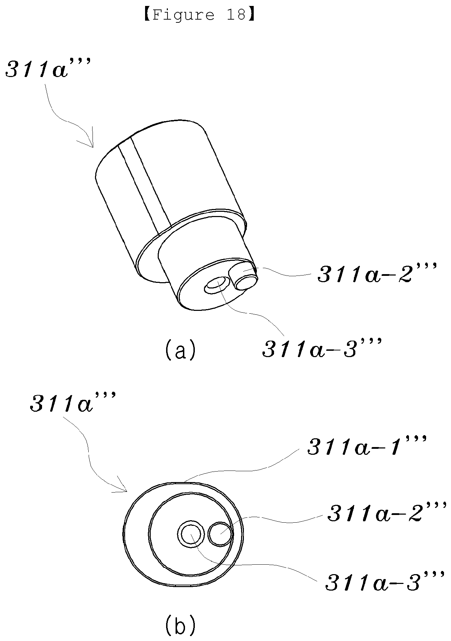

The lever contact member 311a‴ is a component which is brought into contact with the handle H, and is coupled to the rotation member 311b‴ by being inserted into a coupling groove 311b-1‴, to be described later, of the rotation member 311b‴. The lever contact member 311a‴ may be coupled to one of a plurality of coupling grooves 311b-1‴. As illustrated in FIG. 18(b), the lever contact member 311a‴ may be formed so that a surrounding surface 311a-1‴ has an elliptical shape. As illustrated in FIG. 28, the lever contact member 311a‴ rotates in a state in which the surrounding surface 311a-1‴ is in contact with the handle H. As the surrounding surface 311a-1‴ is formed in the shape of an ellipse, the degree of rotation of the support rotation part 311‴ may be changed according to a contact position. Accordingly, the lever contact member 311a‴ may change a position where the lever contact member 311a‴ is coupled to the rotation member 311b‴. Since the degree of rotation may be changed by changing a position where the surrounding surface 311a-1‴ comes into contact with the handle H, rotation may be made such that an accurate voltage or current signal may be generated in conformity with various shapes of the handle H and a rotation angle. To this end, the lever contact member 311a‴ may include a coupling projection 311a-2‴ which is inserted into the rotation member 311b‴, and a coupling hole 311a-3‴ through which the lever contact member 311a‴ is coupled and fixed to the rotation member 311b‴. Accordingly, the coupling projection 311a-2‴ may be inserted and coupled into one of a plurality of insertion holes 311b-2‴ formed in each coupling groove 311b-1‴. By adjusting the position of the surrounding surface 311a-1‴ which is in contact with the handle H, the coupling projection 311a-2‴ may be inserted into the insertion hole 311b-2‴ of an appropriate position while rotating the lever contact member 311a‴. When, in this way, the coupling projection 311a-2‴ of the lever contact member 311a‴ is inserted into the insertion hole 311b-2‴ of the rotation member 311b‴, by inserting separate fixing means (not illustrated) to pass through the rotation member 311b‴ and the coupling hole 311a-3‴, the coupling of the lever contact member 311a‴ and the rotation member 311b‴ is completed.

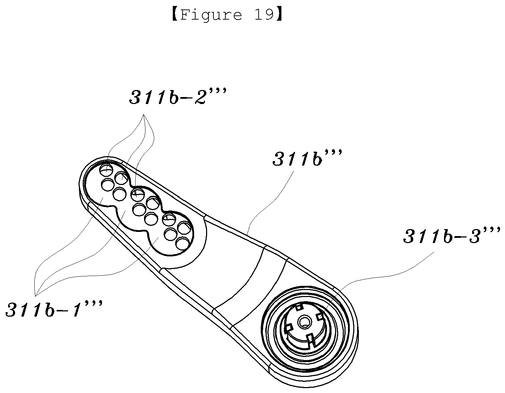

The rotation member 311b‴ has one end which is coupled to the lever contact member 311a‴ to rotate together as described above and the other end which is coupled to the rotation hinge part 313‴ to rotate about the rotation hinge part 313‴. To this end, as illustrated in FIG. 19, the rotation member 311b‴ may include the coupling grooves 311b-1‴, the insertion holes 311b-2‴ and fitting grooves 311b-3‴.

The coupling groove 311b-1‴ is a component which forms a space into which the lever contact member 311a‴ is inserted, and is formed in a plural number to adjust the insertion position of the lever contact member 311a‴.

The insertion hole 311b-2‴ is a hole which is formed through the coupling groove 311b-1‴, and a plurality of insertion holes 311b-2‴ may be formed in each coupling grooves 311b-1‴. Therefore, as described above, the insertion hole 311b-2‴ enables the coupling projection 311a-2‴ of the lever contact member 311a‴ to be inserted therethrough, and while rotating the lever contact member 311a' ' ' according to a position of the surrounding surface 311a-1‴ to be brought into contact with the handle H, the coupling projection 311a-2‴ may be inserted at the position of an appropriate insertion hole 311b-2‴. As the separate fixing means (not illustrated) is inserted through the insertion hole 311b-2‴, the lever contact member 311a‴ and the rotation member 311b‴ are fixed.

The fitting grooves 311b-3‴ are components which are formed at the other end of the rotation member 311b‴ and into which the rotation hinge part 313‴ is inserted. Fitting projections 313a-2‴, to be described later, of the rotation hinge part 313‴ are inserted and fixed into the fitting grooves 311b-3‴. Accordingly, the fitting grooves 311b-3‴ enable the support rotation part 311‴ to rotate about the rotating hinge part 313‴, and enable the rotation hinge part 313‴ to rotate together according to the rotation of the support rotation part 311‴.

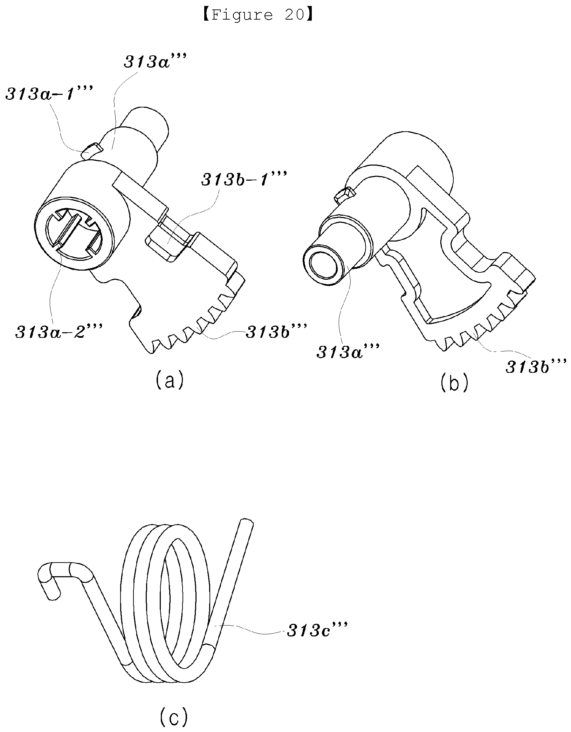

The rotation hinge part 313‴ serves as the rotation center of the support rotation part 311‴, and rotates together with the rotation of the support rotation part 311‴. The rotation connection means 37‴ is formed between the rotation hinge part 313‴ and the sensing means 33‴, more precisely, a magnetic rotation body 331‴ to be described later, to transfer the rotation of the rotation hinge part 313‴ as the rotation of the magnetic rotation body 331‴. As a result, a voltage or current signal which gradually increases may be generated according to the rotation of the magnetic rotation body 331‴. The rotation hinge part 313‴ may maintain a fixed state when the brake manipulation unit 1 is not operated, and may rotate together only when a driver rotates the brake manipulation unit 1. To this end, as illustrated in FIG. 20, the rotation hinge part 313‴ may include a hinge member 313a‴, a hinge gear 313b‴ and a hinge spring 313c‴.

The hinge member 313a‴ is a component which is coupled to the rotation member 311b‴ to rotate together, and serves as the rotation center of the support rotation part 311‴. The hinge gear 313b‴ is projectedly formed on one side of the hinge member 313a‴ to rotate together, and the hinge spring 313c' ' ' is fitted around the hinge member 313a' ' ' so that the hinge member 313a‴ may maintain a fixed state when the brake manipulation unit 1 is not operated. A release prevention protrusion 313a-1‴ is protrusively formed at one point on the outer circumference of the hinge member 313a‴ to prevent the hinge spring 313c‴ fitted around the hinge member 313a‴ from being released from the hinge member 313a‴. The fitting projections 313a-2‴ are projectedly formed at regular intervals on the inner circumference of one end of the hinge member 313a‴ to be inserted and fixed into the fitting grooves 311b-3‴ of the rotation member 311b‴, so that the hinge member 313a‴ can stably rotate according to the rotation of the rotation member 311b‴.

The hinge gear 313b‴ is a component which projects on one side of the hinge member 313a‴ to rotate together with the hinge member 313a‴, and is meshed with a rotation gear body 371‴, to be described later, of the rotation connecting means 37‴ to rotate the rotation gear body 371‴. Accordingly, the hinge gear 313b‴ rotates the rotation gear body 371‴ according to the rotation of the brake manipulation unit 1, and the rotation of the rotation gear body 371‴ is transferred to the magnetic rotation body 331‴ through a connection rotation body 373‴ to be described later. A spring coupling groove 313b-1‴ is formed on the hinge gear 313b‴ so that the hinge spring 313c‴ can be securely fixed.

The hinge spring 313c‴ is fitted around the hinge member 313a‴, and is formed in the shape of a spring as illustrated in FIG. 20(c). As illustrated in FIG. 28(c), one end of the hinge spring 313c‴ may be fixed to the spring coupling groove 313b-1‴, and the other end of the hinge spring 313c‴ may be coupled and fixed to an upper fixing housing 351‴. Accordingly, the hinge spring 313c‴ fixes the hinge member 313a‴ when the brake manipulation unit 1 is not operated, and enables the hinge member 313a‴ and the hinge gear 313b‴ to rotate only when the brake manipulation unit 1 rotates. When the driver releases the brake manipulation unit 1, the hinge spring 313c‴ enables the hinge member 313a‴ and the hinge gear 313b‴ to be automatically returned to their original positions.

The sensing means 33‴ is a component which generates a different voltage or current signal according to the rotation of the brake manipulation unit 1 to adjust the degree of operation of the regenerative braking unit 20. The rotation of the brake manipulation unit 1 is transferred to the sensing means 33‴ through the rotation means 31‴ and the rotation connection means 37‴, and a voltage or current signal is generated accordingly. To this end, the sensing means 33‴ may include the magnetic rotation body 331‴ which rotates together according to the rotation of the brake manipulation unit 1, and a sensor module 333‴ which generates a voltage or current signal according to the rotation of the magnetic rotation body 331‴.

The magnetic rotation body 331" ' is a component which rotates together according to the rotation of the brake manipulation unit 1 and generates a magnetic force, and rotates by being meshed with the connection rotation body 373‴ of the rotation connection means 37‴. The magnetic rotation body 331‴ includes therein a magnetic material to generate a magnetic force. Depending on a position where the magnetic material is brought into contact with the sensor module 333‴, a different voltage or current signal is generated from the sensor module 333‴. Therefore, a voltage or current signal is not generated at an initial position of the magnetic rotation body 331‴. As the magnetic rotation body 331‴ rotates, a voltage or current signal which gradually increases is generated. The magnetic rotation body 331‴ rotates together to the first position ⓐ according to the rotation of the brake manipulation unit 1 to generate a maximum voltage or current signal. While the brake manipulation unit 1 rotates from the first position ⓐ to the second position ⓑ, the magnetic rotation body 331‴ maintains a state in which it is fixed at a position where the maximum voltage or current signal is generated, to maintain the maximum degree of operation of the regenerative braking unit 20. To this end, the magnetic rotation body 331‴ may include a rotation gear 331a‴, a magnetic member 331b‴, a fixing projection 331c‴, an engagement groove 331d‴ and a pulling element 331e‴.

The rotation gear 331a‴ is a component which rotates by being meshed with the connection rotation body 373‴, and more precisely, rotates by being meshed with a connection gear 373d‴, to be described later, of the connection rotation body 373‴. Accordingly, the magnetic rotation body 331‴ rotates according to the rotation of the connection rotation body 373‴, and a voltage or current signal is generated through the sensor module 333‴ according to the degree of rotation.

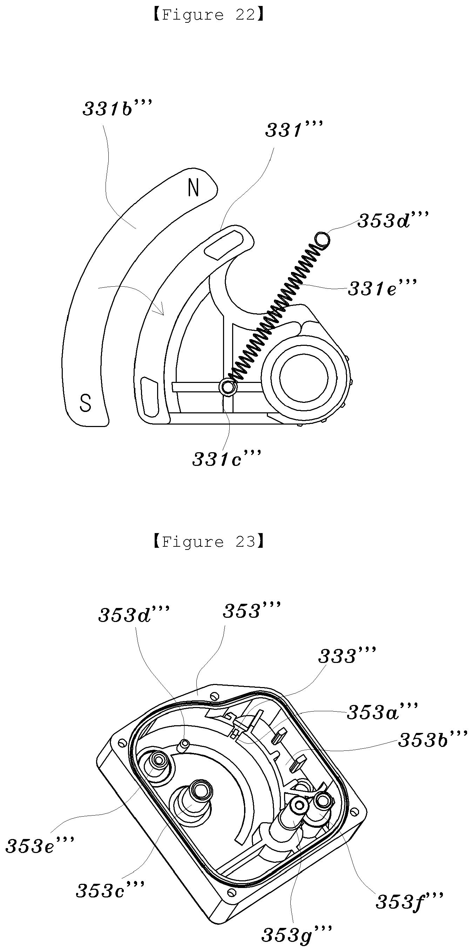

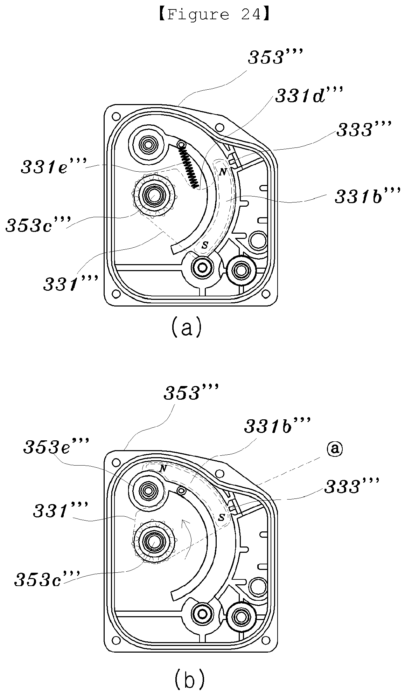

As illustrated in FIG. 22, the magnetic member 331b‴ is inserted along one side of the magnetic rotation body 331‴ to rotate together with the magnetic rotation body 331‴. The magnetic member 331b‴ is formed of a magnetic material having N and S poles to generate a different voltage or current signal depending on a position where the magnetic member 331b‴ is brought into contact with the sensor module 333‴. At an initial position as illustrated in FIG. 24(a), the magnetic member 331b‴ prevents a voltage or current signal from being generated through the sensor module 333‴. As the magnetic member 331b‴ rotates up to the first position ⓐ as illustrated in FIG. 24(b) according to the rotation of the brake manipulation unit 1, a voltage or current signal which gradually increases is generated so that a maximum voltage or current signal is generated at the first position ⓐ.

The fixing projection 331c‴ is a component which is formed to project at a lower portion of the magnetic rotation body 331‴ to support one end of the pulling element 331e‴, and enables the magnetic rotation body 331‴ to be pulled by the pulling element 331e‴ fixed to a lower housing 353‴.

The engagement groove 331d‴ is formed to be depressed on one side of the magnetic rotation body 331‴ so as to be supported by a limiting projection 353e‴, to be described later, of the lower housing 353‴. The engagement groove 331d‴ enables the magnetic rotation body 331‴ to be in a state in which it is supported by the limiting projection 353e‴ at a position where the magnetic rotation body 331‴ is rotated to the first position ⓐ, and through this, enables the magnetic rotation body 331‴ to stably maintain the state in the first position ⓐ where a maximum voltage or current signal is generated.

The pulling element 331e‴ has one end which is fixed to the fixing projection 331c‴ and the other end which is fixed to a fixing end 353d‴, to be described later, of the lower housing 353‴, to pull the magnetic rotation body 331‴. Accordingly, the pulling element 331e‴ may be formed by a spring having elasticity, and enables the magnetic rotation body 331‴ to smoothly rotate in the direction of the first position ⓐ from the initial position. The magnetic rotation body 331‴ is fixed at the initial position when the brake manipulation unit 1 is not operated. This is because the rotation hinge part 313‴' maintains the fixed state by the hinge spring 313c‴. Thereafter, when the driver rotates the brake manipulation unit 1, the magnetic rotation body 331" ' also rotates together through the support rotation part 311‴, the rotation hinge part 313‴ and the rotation connection means 37‴. The magnetic rotation body 331‴ smoothly rotates to the first position ⓐ by being provided, through the pulling element 331e‴, with a force for rotating in the direction of the first position ⓐ, and causes respective gears to rotate by being accurately meshed in the process in which rotation is transferred. Through this, the generation of a voltage or current signal through the rotation of the magnetic rotation body 331‴ may be accurately enabled according to the degree of rotation.

The sensor module 333‴ is a component which outputs a voltage or current signal by a magnetic force generated by the magnetic member 331b‴ of the magnetic rotation body 331‴, and is fixed at a predetermined position on the lower housing 353‴. As the sensor module 333‴, a Hall sensor capable of generating a different voltage or current signal according to the rotation of the magnetic member 331b‴ may be applied, so that a different voltage or current signal is generated according to the position of the adjacent magnetic member 331b‴. As described above, the sensor module 333‴ generates a voltage or current signal which increases as the magnetic rotation body 331‴ moves from the initial position to the first position ⓐ, to increase the degree of operation of the regenerative braking unit 20. The sensor module 333‴ is connected to a sensor line 333a‴ so that a voltage or current signal can be transferred to the regenerative operation unit 5.

The fixing means 35‴ accommodates the rotation means 31‴ and the rotation connection means 37‴ in a closed space, and causes the regenerative adjustment unit 3‴ to be in a state in which it is fixed to the handle H of the electric vehicle. The fixing means 35‴ may be formed as the upper fixing housing 351‴ and the lower housing 353‴ are coupled to each other, and a waterproof member 355‴ is inserted between the upper fixing housing 351‴ and the lower housing 353‴ to seal the inside of the fixing means 35‴.

The upper fixing housing 351‴ is coupled with the lower housing 353‴ to form a closed space, and is fixed to the handle H of the electric vehicle. The upper fixing housing 351‴ enables the rotation member 311b‴ and the hinge member 313a‴ to be inserted and coupled through a through hole 351a‴. In order to ensure that the inserted rotation member 311b‴ maintains a stably coupled state, as illustrated in FIG. 17, a projecting protrusion 351b‴ is projectedly formed around the circumference of the through hole 351a' ' ' to support the rotation member 311b‴. A protection cover 351c‴ is additionally installed outside the projecting protrusion 351b‴ to protect the rotation member 311b‴ from an external shock.

The lower housing 353‴ is coupled to the upper fixing housing 351‴ to form a closed space, the magnetic rotation body 331‴ is supported by the lower housing 353‴ to rotate, and the sensor module 333‴ and the sensor line 333a‴ are inserted and fixed into the lower housing 353‴. The lower housing 353‴ fixes the pulling element 331e‴ to pull the magnetic rotation body 331‴, limits the rotation of the magnetic rotation body 331‴, limits the rotation of the connection rotation body 373‴ of the rotation connection means 37‴ by supporting the connection rotation body 373‴, and forms the rotation centers of the connection rotation body 373‴ and the rotation gear body 371‴. To this end, as illustrated in FIG. 23, the lower housing 353‴ may include a sensor groove 353a‴, a line insertion groove 353b‴, a support shaft 353c‴, the fixing end 353d‴, the limiting projection 353e‴, an insertion shaft 353f‴, and a limiting protrusion 353g‴.

The sensor groove 353a‴ is a component which is formed by being depressed at a predetermined position to enable the sensor module 333‴ to be inserted therein, and is formed on one side of the rotation path of the magnetic member 331b‴.

The line insertion groove 353b‴ is a component into which the sensor line 333a‴ is inserted and fixed. The sensor line 333a‴ is connected to the outside so that connection to the regenerative operation unit 5 may be made.

The support shaft 353c‴ is formed to project upward, is fitted into the magnetic rotation body 331‴, and serves as the rotation center of the magnetic rotation body 331‴.

The fixing end 353d‴ is a component which is formed to protrude so as to fix the other end of the pulling element 331e‴, and causes the magnetic rotation body 331‴ to be pulled by the elasticity of the pulling element 331e‴.

The limiting projection 353e‴ is a component which limits the rotation of the magnetic rotation body 331‴. The limiting projection 353e‴ is formed at a position where the limiting projection 353e‴ can be brought into close contact with the engagement groove 331d‴ of the magnetic rotation body 331‴ when the brake manipulation unit 1 is rotated to the first position ⓐ, to enable the magnetic rotation body 331‴ to maintain a state in which it is fixed at the first position ⓐ, so that the maximum degree of operation of the regenerative braking unit 20 can be maintained.

The insertion shaft 353f‴ is a component which is inserted into the connection rotation body 373‴ to serve as the rotation center of the connection rotation body 373‴. The insertion shaft 353f‴ is inserted into a shaft passage hole 373a‴, to be described later, of the connection rotation body 373‴.

The limiting protrusion 353g‴ is a component which is inserted into the connection rotation body 373‴ and the rotation gear body 371‴, limits the rotation of the connection rotation body 373‴ beyond a predetermined range, that is, beyond the first position ⓐ, and forms the rotation center of the rotation gear body 371‴.

The rotation connection means 37‴ is a component which is formed between the rotation means 31‴ and the sensing means 33‴ so that the rotation force of the rotation means 31‴ is transferred to the sensing means 33‴ and more precisely, the rotation of the rotation hinge part 313‴ can be transferred to the magnetic rotation body 331‴. In particular, while the brake manipulation unit 1 rotates from the initial position to the first position ⓐ, the rotation connection means 37‴ causes the magnetic rotation body 331‴ to rotate together with the rotation of the rotation hinge part 313‴, so that a voltage or current signal which increases is generated up to the first position ⓐ. While the brake manipulation unit 1 rotates from the first position ⓐ to the second position ⓑ, a unique structure is obtained, in which the magnetic rotation body 331‴ does not rotate and only the brake manipulation unit 1 can rotate. To this end, the rotation connection means 37‴ may include the rotation gear body 371‴ which rotates by being meshed with the hinge gear 313b‴ of the rotation hinge part 313''', and the connection rotation body 373‴ which rotates by being connected to the rotation gear body 371‴ and rotates the magnetic rotation body 331‴ by being meshed with the rotation gear 331a‴ of the magnetic rotation body 331‴.

The rotation gear body 371‴ is a component which rotates by being meshed with the hinge gear 313b‴, and may rotate the connection rotation body 373‴ according to the rotation of the hinge gear 313b‴. However, only when the brake manipulation unit 1 rotates to the first position ⓐ, the rotation gear body 371‴ rotates the connection rotation body 373‴. While the brake manipulation unit 1 passes by the first position ⓐ and rotates to the second position ⓑ, the rotation gear body 371‴ does not rotate the connection rotation body 373‴, and only the rotation gear body 371‴ rotates. Accordingly, the rotation gear body 371‴ rotates the connection rotation body 373‴ up to the first position ⓐ so that the magnetic rotation body 331‴ can be rotated accordingly. When the first position ⓐ is passed by, the magnetic rotation body 331‴ maintains a state in which it is fixed at the first position ⓐ, and the brake manipulation unit 1 can freely rotate up to the second position ⓑ, so that the maximum degree of operation of the regenerative braking unit 20 may be continuously maintained up to the second position ⓑ. To this end, the rotation gear body 371‴ may include a contact gear 371a‴ which is meshed with the hinge gear 313b‴, and an insertion projection 371b‴ which is inserted into the connection rotation body 373‴.

The contact gear 371a‴ is a component which rotates by being meshed with the hinge gear 313bʺ, and rotates the connection rotation body 373‴ according to the rotation of the hinge gear 313b‴. Accordingly, the insertion projection 371b‴ also rotates together. The contact gear 371a‴ is fitted around the limiting protrusion 353g‴ so that the rotation gear body 371‴ can rotate about the limiting protrusion 353g‴.

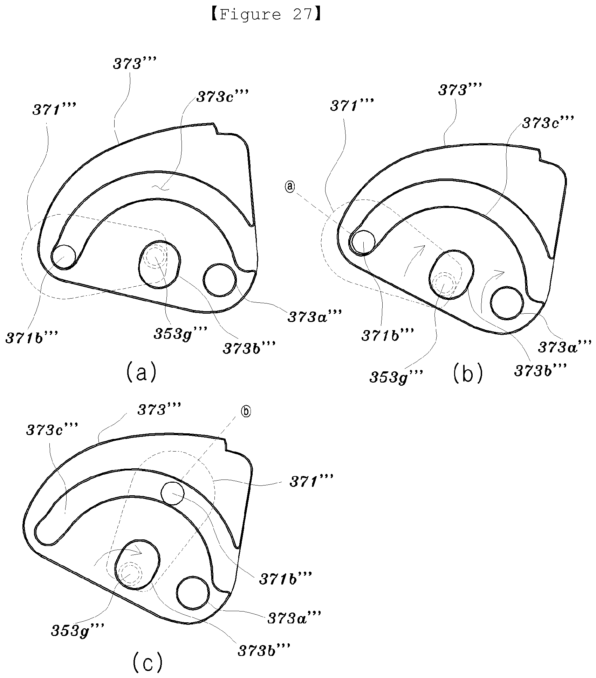

The insertion projection 371b‴ is a component which is formed on a side opposite to the contact gear 371a‴ to be inserted into the connection rotation body 373‴. The insertion projection 371b‴ is inserted into a guide groove 373c‴, to be described later, of the connection rotation body 373‴ ' to move along the guide groove 373c‴. As illustrated in FIG. 27(a), when the brake manipulation unit 1 is not operated, the insertion projection 371b‴ is in close contact with one end of the guide groove 373c‴, and is fixed by the hinge spring 313c‴ in a state in which the connection rotation body 373‴ is rotated by a predetermined angle. Therefore, when the brake manipulation unit 1 is gradually rotated, the insertion projection 371b‴ rotates together, and, together with the rotation of the insertion projection 371b‴, the connection rotation body 373‴ also rotates while being pulled by the elasticity of the pulling element 331e‴. Such rotation is transferred to the magnetic rotation body 331‴ so that a voltage or current signal which gradually increases is generated by the sensor module 333‴ up to the first position ⓐ. As illustrated in FIG. 27(b), when the first position ⓐ is reached, the rotation of the magnetic rotation body 331‴ is stopped by the limiting projection 353e‴, and the rotation of the connection rotation body 373‴ is also stopped by the limiting protrusion 353g‴. Then, as the brake manipulation unit 1 is rotated from the first position ⓐ to the second position ⓑ as illustrated in FIG. 27(c), the connection rotation body 373‴ is not influenced thereby and is fixed at the first position ⓐ to maintain the maximum degree of operation of the regenerative braking unit 20, and the insertion projection 371b‴ rotates along the guide groove 373c‴ of the connection rotation body 373‴. Accordingly, the rotation connection means 37‴ may generate a voltage or current signal which increases by the rotation of the magnetic rotation body 331‴ up to the first position ⓐ of the brake manipulation unit 1. From the first position ⓐ to the second position ⓑ, the maximum degree of operation of the regenerative braking unit 20 is maintained, and the mechanical braking unit 10 may be simultaneously operated through the rotation of the brake manipulation unit 1.

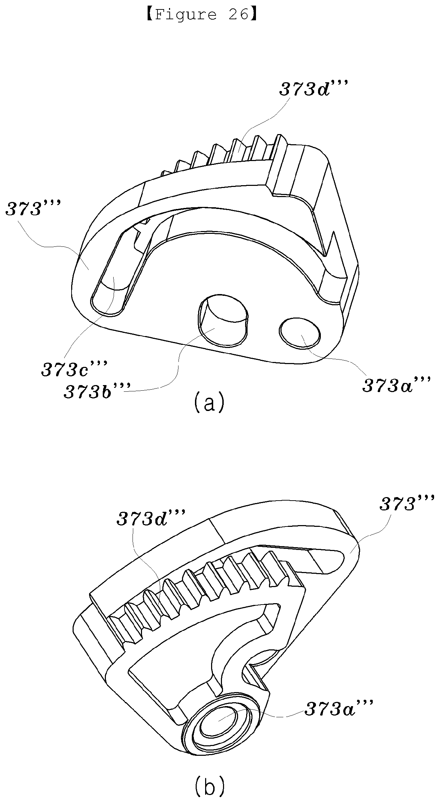

The connection rotation body 373‴ is a component which is rotated by the rotation gear body 371‴ and rotates the magnetic rotation body 331‴, and as illustrated in FIG. 26, may include the shaft passage hole 373a‴, an insertion support hole 373b‴, the guide groove 373c‴ and the connecting gear 373d‴.

The shaft passage hole 373a‴ is a component through which the insertion shaft 353f‴ is inserted, and causes the connection rotation body 373‴ to rotate about the insertion shaft 353f‴.

The insertion support hole 373b‴ is a component through which the limiting protrusion 353g‴ is inserted, and causes the connection rotation body 373‴ which rotates together according to the rotation of the insertion projection 371b‴, not to rotate any more by being caught by the limiting protrusion 353g" at the first position ⓐ.

The guide groove 373c‴ is a component which forms a path into and through which the insertion projection 371b‴ is inserted and moves. As described above, when the brake manipulation unit 1 is not operated, the insertion projection 371b‴ is brought into close contact with the one end of the guide groove 373c‴ to be fixed in a state in which the connection rotation body 373‴ is rotated by a predetermined angle. When the insertion projection 371b‴ rotates according to the rotation of the brake manipulation unit 1, the connection rotation body 373‴ may rotate together with the insertion projection 371b‴ up to the first position ⓐ in a state in which the insertion projection 371b‴ is brought into close contact with the one end of the guide groove 373c‴. From the first position ⓐ to the second position ⓑ, the rotation of the connection rotation body 373‴ is limited. In order to ensure that the rotation of the insertion projection 371b' ' ' is smoothly carried out in a state in which the rotation of the connection rotation body 373‴ is limited, the guide groove 373c‴ may be formed along the rotation path of the insertion projection 371b‴ according to the rotation of the rotation gear body 371‴.

The connection gear 373d‴ is a component which is formed on the lower side of the connection rotation body 373‴ to be meshed with the rotation gear 331a‴ of the magnetic rotation body 331‴, and causes the rotation of the magnetic rotation body 331‴ to be made according to the rotation of the connection rotation body 373‴.

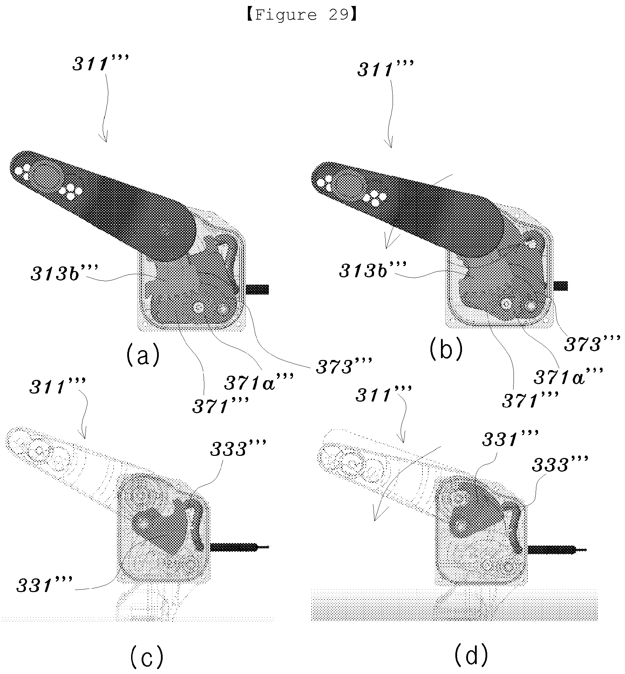

Describing the operation process of the regenerative adjustment unit 3‴ in accordance with the present embodiment with reference to FIGS. 28 and 29, when the hand brake 11 is rotated as illustrated in FIG. 28(b) in a state in which the lever contact member 311a‴ is brought into close contact with the hand brake 11 as illustrated in FIG. 28(a), the rotation member 311b‴ rotates, and the hinge member 313a‴ and the hinge gear 313b‴ which are maintained in a fixed state by the hinge spring 313c‴ as illustrated in FIG. 28(c) rotate as illustrated in FIG. 28(d) by overcoming a returning force by the elasticity of the hinge spring 313c‴. The contact gear 371a‴ of the rotation gear body 371‴ which is meshed with the hinge gear 313b‴ as illustrated in FIG. 29(a) also rotates together according to the rotation of the hinge gear 313b‴ as illustrated in FIG. 29(b), and the connection rotation body 373‴ which is connected to the rotation gear body 371‴ also rotates together up to the first position ⓐ. Then, the magnetic rotation body 331‴ which does not generate a voltage or current signal through the sensor module 333‴ at the initial position as illustrated in FIG. 29(c) rotates up to the first position ⓐ as illustrated in FIG. 29(d) to generate a voltage or current signal which gradually increases, so that the degree of operation of the regenerative braking unit 20 increases to a maximum value.

Furthermore, as described above, from the first position ⓐ to the second position ⓑ, while the brake manipulation unit 1 rotates from the first position ⓐ of FIG. 27(b) to the second position ⓑ of FIG. 27(c), the rotation of the connection rotation body 373‴ and the magnetic rotation body 331‴ is fixed, and as the insertion projection 371b‴ of the rotation gear body 371‴ moves along the guide groove 373c‴ of the connection rotation body 373‴, the rotation of only the brake manipulation unit 1 is made.

The regenerative operation unit 5 is a component which operates the regenerative braking unit 20 according to a voltage or current signal transferred by the regenerative adjustment unit 3, and causes the regenerative braking unit 20 to operate with priority over acceleration when the brake manipulation unit 1 rotates. However, when the regenerative braking unit 20 always operates with priority over acceleration, acceleration may not be properly performed at an initial start of the electric vehicle, which may cause a problem in that the electric vehicle is likely to roll back on a slope, etc. Therefore, the regenerative operation unit 5 may be set so that acceleration is performed with priority over the regenerative braking unit 20 within a predetermined speed range. To this end, the regenerative operation unit 5 may include a voltage value reception module 51, a regenerative braking module 53, a regeneration priority operation module 55, and an acceleration priority setting module 57.

The voltage value reception module 51 is a component which receives a voltage signal transferred from the sensing means 33 of the regenerative adjustment unit 3, and may receive a current signal of a variable magnitude. A voltage or current signal of various ranges such as 0-5V, 0-10V and 4-10mA may be received, and there is no limitation on this.

The regenerative braking module 53 is a component which adjusts the operation of the regenerative braking unit 20 according to a voltage value or a current value received by the voltage value reception module 51. As a voltage value or a current value is high, an amount of current supplied to a battery from an electric motor is increased so that the degree of operation of the regenerative braking unit 20 is increased.

The regeneration priority operation module 55 is a component which causes the regenerative braking unit 20 to operate with priority over acceleration when the brake manipulation unit 1 is operated. In other words, even in the case where the acceleration of the electric vehicle is being performed by supplying electricity to the electric motor, in the case where the regenerative braking unit 20 operates according to the manipulation of the brake manipulation unit 1, the supply of electricity to the electric motor is stopped, and the electric motor is transformed into a generator. Thus, the kinetic energy of a wheel is converted into electrical energy so that charging of a battery is performed, which enables the effective operation of the regenerative braking unit 20. However, within a predetermined speed range, acceleration is performed with priority by the acceleration priority setting module 57 to prevent the electric vehicle from rolling back.

The acceleration priority setting module 57 is a component which sets a speed range within which acceleration is performed with priority over the regenerative braking unit 20. Within the set speed range, even in the case where the regenerative braking unit 20 is operating, acceleration may be performed by supply electricity to the electric motor when an accelerator device (not illustrated) is manipulated. The acceleration priority setting module 57 may set an acceleration priority speed range according to the speed of the electric vehicle or the rotational speed (RPM) of the electric motor. For example, the acceleration priority setting module 57 may set a range of 0 to 200 km/h or 0 to 100000 RPM. Preferably, the acceleration priority setting module 57 may cause acceleration to be performed with priority within a range from 0 including the stopped state of the electric vehicle to a predetermined speed, and through this, it is possible to prevent the electric vehicle from rolling back when the electric vehicle starts, especially, on a slope.

Although various embodiments of the present disclosure were described above, those embodiments are only examples for achieving the spirit of the present disclosure, and any changes or modifications that achieve the spirit of the present disclosure should be construed as being included in the present disclosure.

## Claims

1. An electric vehicle braking manipulation system having a mechanical braking unit and a regenerative braking unit, the system comprising:
a brake manipulation unit rotated by a hand or foot of an electric vehicle driver to operate the mechanical braking unit; and
a regenerative operation unit configured to operate the regenerative braking unit according to rotation of the brake manipulation unit.

2. The electric vehicle braking manipulation system of claim 1, wherein the electric vehicle braking manipulation system comprises:
a regenerative adjustment unit configured to adjust a degree of operation of the regenerative braking unit according to rotation of the brake manipulation unit.

3. The electric vehicle braking manipulation system of claim 2, wherein the regenerative adjustment unit variably increases a degree of operation of the regenerative braking unit according to a predetermined degree of initial rotation of the brake manipulation unit, and after the predetermined degree of rotation, maintains a maximum degree of operation of the regenerative braking unit and causes the regenerative braking unit to simultaneously operate with the mechanical braking unit.

4. The electric vehicle braking manipulation system of claim 2, wherein the regenerative adjustment unit comprises rotation means which is fixed to the brake manipulation unit and rotates together according to rotation of the brake manipulation unit, sensing means which senses rotation of the rotation means to generate a voltage or current signal for adjusting a degree of operation of the regenerative braking unit, and fixing means which fixes the regenerative adjustment unit to a body of an electric vehicle.

5. The electric vehicle braking manipulation system of claim 4, wherein the rotation means comprises a rotation dog which is rotated by being fixed to the brake manipulation unit,
the sensing means comprises a displacement sensor module which senses a distance to the rotation dog to generate a voltage or current signal of a variable magnitude for adjusting a degree of operation of the regenerative braking unit depending on the distance, and
the fixing means comprises a fixing bracket which fixes the displacement sensor module to the body of the electric vehicle.

6. The electric vehicle braking manipulation system of claim 4, wherein the sensing means comprises a magnetic force generation module which moves according to rotation of the brake manipulation unit and generates a magnetic force, a Hall sensor which is fixed at a predetermined position to generate a voltage or current signal of a variable magnitude so as to adjust a degree of operation of the regenerative braking unit depending on a magnetic force varying by movement of the magnetic force generation module, and a sensing body which accommodates therein the magnetic force generation module and the Hall sensor.

7. The electric vehicle braking manipulation system of claim 6, wherein the magnetic force generation module comprises a regenerative magnet member which linearly moves on the Hall sensor according to rotation of the brake manipulation unit to generate a variable voltage or current signal; a magnet housing which accommodates therein the regenerative magnet member to be fixed and linearly moves inside the sensor body according to rotation of the brake manipulation unit; a connection member which connects the brake manipulation unit and the magnet housing to cause the magnet housing to linearly move according to rotation of the brake manipulation unit; and an elastic element which is fitted around the connection member to be compressively supported between an inside of the sensor body and the magnet housing.

8. The electric vehicle braking manipulation system of claim 7, wherein the magnetic force generation module further comprises a magnetic force maintenance member which is accommodated in the magnet housing so that ends of the magnetic force maintenance member and the regenerative magnet member which have the same polarity face each other, and is separated from the regenerative magnet member by a predetermined distance to linearly move together, so that magnetic force lines are secured.

9. The electric vehicle braking manipulation system of claim 7, wherein the rotation means comprises a rotation dog which is fixed to the brake manipulation unit to be rotated and is formed on an end of the connection member to cause movement of the connection member to be made according to rotation of the brake manipulation unit,
the rotation dog has a fitting groove which is formed to be depressed in a vertical direction and into which the connection member is fitted, and
the connection member includes an engagement tip which is fitted into the fitting groove to move in the vertical direction, so that position adjustment of the rotation dog in the vertical direction is made possible.

10. The electric vehicle braking manipulation system of claim 9, wherein surfaces of the fitting groove and the engagement tip which are brought into contact with each other are formed to be rounded so that rotation of the engagement tip in a left-right direction in the fitting groove is possible.

11. The electric vehicle braking manipulation system of claim 7, wherein the rotation means comprises a rotation dog which is fixed to the brake manipulation unit to be rotated and is formed on an end of the connection member to cause movement of the connection member to be made according to rotation of the brake manipulation unit,
the rotation dog comprises an adjustment member which is connected to the brake manipulation unit and is inserted into the rotation dog to be fixed; and a support groove which is formed to be depressed on the rotation dog and into which the adjustment member is inserted,
the support groove includes an insertion hole which is formed to pass through the support groove in an elliptical shape,
the adjustment member includes an insertion projection which is inserted into the insertion hole and moves along the insertion hole, and
the insertion hole is formed in a lengthwise direction toward the sensing body to cause the insertion projection to move along the insertion hole so as to adjust a position of the rotation dog to be distant from or close to the sensing body.

12. The electric vehicle braking manipulation system of claim 4, wherein the rotation means comprises a support rotation part which is supported by the brake manipulation unit to move together according to rotation of the brake manipulation unit; and a rotation hinge part which is coupled to the support rotation part to rotate together and serves as a rotation shaft of the support rotation part,
the sensing means comprises a magnetic rotation body which rotates within a predetermined path according to rotation of the rotation hinge part to generate a magnetic force; and a sensor module which generates a variable voltage or current signal according to rotation of the magnetic rotation body, and
the fixing means comprises an upper fixing housing which supports the rotation means and is fixed to the body of the electric vehicle; and a lower housing which is coupled to a lower side of the upper fixing housing to form a closed space and accommodates the magnetic rotation body and the sensor module.

13. The electric vehicle braking manipulation system of claim 12, wherein the electric vehicle braking manipulation system further comprises rotation connection means which connects the rotation means and the sensing means, and
the rotation connection means rotates the magnetic rotation body only within an initial predetermined range when the rotation means rotates, and when the rotation means goes out of the predetermined range, causes rotation of the rotation means to be made without exerting an influence on the magnetic rotation body.

14. The electric vehicle braking manipulation system of claim 13, wherein the rotation connection means comprises a rotation gear body which is brought into contact with the rotation hinge part to be meshed with the rotation hinge part and rotates in an opposite direction according to rotation of the rotation hinge part; and a connection rotation body which supports the rotation gear body, rotates together according to rotation of the rotation gear body only within an initial predetermined range of rotation of the rotation gear body and is meshed with the magnetic rotation body to rotate the magnetic rotation body.

15. The electric vehicle braking manipulation system of claim 14, wherein the magnetic rotation body comprises a rotation gear which rotates by being meshed with the connection rotation body; a magnetic member which is inserted along one side of the magnetic rotation body to generate a variable voltage or current signal in the sensor module according to rotation of the magnetic rotation body; and a pulling element which is formed between the magnetic rotation body and the lower housing to pull the magnetic rotation body, and
the lower housing comprises a sensor groove into which the sensor module is inserted to be fixed; a support shaft which serves as a rotation shaft of the magnetic rotation body; a fixing end which fixes the pulling element; a limiting projection which limits rotation of the magnetic rotation body; an insertion shaft which projects upward to be inserted into the connection rotation body and serves as a rotation shaft of the connection rotation body; and a limiting protrusion which protrudes upward to be inserted into the connection rotation body and limits rotation of the connection rotation body.

16. The electric vehicle braking manipulation system of claim 15, wherein the rotation gear body comprises a contact gear which rotates by being meshed with the rotation hinge part; and an insertion projection which projects at a point on a lower side to be inserted into the connection rotation body,
the connection rotation body comprises a shaft passage hole into which the insertion shaft is inserted; an insertion support hole into which the limiting protrusion is inserted; a guide groove which causes the insertion projection to move in a state in which the insertion projection is inserted into the guide groove; and a connection gear which rotates by being meshed with the rotation gear,
the limiting protrusion is caught in the insertion support hole to limit rotation of the connection rotation body when the magnetic rotation body is engaged with the limiting projection in the case where the rotation gear body rotates in a state in which the connection rotation body rotates with the insertion projection engaged with an end of the guide groove, and
the guide groove is formed along a movement path of the insertion projection according to rotation of the rotation gear body so that rotation of the rotation gear body is possible even after rotation of the connection rotation body is limited by the limiting protrusion.

17. The electric vehicle braking manipulation system of claim 14, wherein the support rotation part comprises a lever contact member which is brought into contact with the brake manipulation unit; and a rotation member which is coupled to the lever contact member to rotate together according to rotation of the brake manipulation unit, and
the rotation member includes a plurality of coupling grooves into which the lever contact member is to be coupled, to adjust a position where the lever contact member is coupled.

18. The electric vehicle braking manipulation system of claim 17, wherein the rotation member includes a plurality of insertion holes which pass through each coupling groove, and
the lever contact member includes a coupling projection which projects downward and is inserted into one among the insertion holes, and is formed in an elliptical shape to adjust a rotation path of the rotation member according to a position where the coupling projection is inserted.

19. The electric vehicle braking manipulation system of claim 14, wherein the rotation hinge part comprises a hinge member which is coupled to the support rotation part to rotate together; a hinge gear which projects on one side of the hinge member to be meshed with the rotation gear body; and a hinge spring fitted around the hinge member to be fixed to the lower housing and the hinge gear at both ends thereof and pulls the rotation hinge part to return the rotation gear part to an original position.

20. The electric vehicle braking manipulation system of claim 1, wherein the regenerative operation unit comprises a regeneration priority operation module which operates with priority over acceleration when the regenerative braking unit is operated by the brake manipulation unit, and an acceleration priority setting module which sets a speed range within which acceleration is performed with priority over the regenerative braking unit.
